# EUROPEAN PATENT APPLICATION

(11) **EP 4 411 342 A1**
(43) Date of publication of application: **07.08.2024**
(21) Application number: 22875586.4
(22) Date of filing: 01.08.2022
(51) Int. Cl.: G01N 15/14, G01N 37/00, G01N 35/08

(54) **FLOW CHANNEL DEVICE AND SEPARATION PROCESSING DEVICE**

(30) Priority: 30.09.2021 JP 2021161638
(71) Applicant: Kyocera Corporation, Kyoto-shi Kyoto 612-8501 (JP)
(72) Inventor: SASAHARA, Masamitsu, Kyoto-shi, Kyoto 612-8501 (JP)
(74) Representative: Viering, Jentschura & Partner mbB Patent- und Rechtsanwälte
(86) International application number: PCT/JP2022/029473
(87) International publication number: WO 2023/053709

(57) **Abstract**

A flow path device includes a first plate including first and second surfaces, a second plate including third and fourth surfaces, a first flow path between the second and third surfaces, a first hole continuous with a first end area of the first flow path, a second hole continuous with a second end area of the first flow path, a bonded portion in which a protruding portion is bonded to a recessed portion between the second and third surfaces with the first flow path between portions of the bonded portion in a width direction, a non-bonded portion between the protruding portion and the first flow path with the first flow path between portions of the non-bonded portion in the width direction, and a pair of dividers dividing the non-bonded portion in a longitudinal direction with the first flow path between the pair of dividers in the width direction.

## Description

### CROSS-REFERENCE TO RELATED APPLICATION

This application claims priority to Japanese Patent Application No. 2021-161638 filed on September 30, 2021, the entire disclosure of which is incorporated herein by reference.

### TECHNICAL FIELD

The present disclosure relates to a flow path device and a separating processing device.

### BACKGROUND OF INVENTION

A known separating processing device (refer to, for example, Patent Literature 1) includes a separating flow path device joined to a measurement flow path device. The separating flow path device includes a microfluidic flow path (also referred to as a separating flow path) for separating particles of a specific type from a fluid containing particles of multiple types. The measurement flow path device includes a flow path (also referred to as a measurement flow path) for measuring a fluid (also referred to as a sample) containing particles of the specific type separated and collected by the separating flow path device. In the separating processing device, the measurement flow path device includes a first hole for introducing the sample into the measurement flow path and a second hole for collecting the sample from the measurement flow path. The measurement flow path device includes a first plate, made of a resin and including a groove, and a second plate, made of a resin, which are stacked on each other with the second plate covering the groove on the first plate and then are bonded together.

A known technique for stacking and bonding a first plate including a recessed groove on its surface to a flat second plate (refer to, for example, Patent Literature 2 or 3) is used for manufacturing an internal flow path device including a flow path defined by the recessed groove on the first plate and a surface of the second plate. With this technique, before the first plate and the second plate are bonded together, for example, the first plate includes, on its surface for bonding, the recessed groove for defining the flow path and a protruding portion for bonding around and along the recessed groove, and the second plate includes, on its surface for bonding, a recessed portion for bonding at a position facing the protruding portion for bonding. Before being bonded together, for example, the first plate and the second plate are stacked on each other with the bottom of the recessed portion for bonding in contact with the distal end of the protruding portion for bonding, and the protruding portion for bonding is bonded to the recessed portion for bonding by, for example, ultrasonic welding.

### CITATION LIST

### PATENT LITERATURE

Patent Literature 1: WO 2019/151150
Patent Literature 2: Japanese Unexamined Patent Application Publication No. 2007-283677
Patent Literature 3: Japanese Unexamined Patent Application Publication No. 2014-233960

### SUMMARY

One or more aspects of the present disclosure are directed to a flow path device and a separating processing device.

In an aspect, a flow path device includes a first plate, a second plate, a first grooved flow path, a first hole, a second hole, a bonded portion, a non-bonded portion, and a pair of dividers. The first plate includes a first surface and a second surface opposite to the first surface. The second plate is stacked on the first plate. The second plate includes a third surface and a fourth surface opposite to the third surface. The third surface is partially bonded to the second surface. The first grooved flow path is between the second surface and the third surface. The first grooved flow path is not open in the first surface and is not open in the fourth surface. The first hole is continuous with a first end area of the first grooved flow path in a first longitudinal direction of the first grooved flow path. The first hole is open in the first surface or is open in the fourth surface. The second hole is continuous with a second end area of the first grooved flow path. The second end area is opposite to the first end area in the first longitudinal direction. The second hole is open in the fourth surface. The bonded portion extends along the first grooved flow path with the first grooved flow path between portions of the bonded portion in a width direction perpendicular to the first longitudinal direction and parallel to the second surface. With the second surface including a recessed portion and the third surface including a protruding portion or with the second surface including a protruding portion and the third surface including a recessed portion, the bonded portion is a portion in which the protruding portion is bonded to the recessed portion. The non-bonded portion extends along the first grooved flow path with the first grooved flow path between portions of the non-bonded portion in the width direction. The non-bonded portion is located between the protruding portion and the first grooved flow path. The non-bonded portion is a portion in which the second surface and the third surface are in contact with or adjacent to each other. The pair of dividers divide the non-bonded portion in the first longitudinal direction with the first grooved flow path between the pair of dividers in the width direction. Each of the pair of dividers fills a space between the protruding portion and a partial area of the first grooved flow path located between the first end area and the second end area in the first longitudinal direction.

In an aspect, a separating processing device includes a first flow path device including the flow path device according to the above aspect and a second flow path device on the first surface of the first flow path device. The first hole is open in the first surface. The second flow path device includes a fifth surface, a sixth surface, a grooved separating flow path, and a fourth hole. The fifth surface is opposite to the first surface. The sixth surface is opposite to the fifth surface and adjacent to the first surface. The grooved separating flow path is not open in the fifth surface. The fourth hole is continuous with the grooved separating flow path and open in the sixth surface. The fourth hole is continuous with the first hole.

### BRIEF DESCRIPTION OF THE DRAWINGS

FIG. 1 is a schematic plan view of an example flow path device according to an embodiment.
FIG. 2 is a schematic plan view of an example processing device according to the embodiment.
FIG. 3 is a schematic imaginary example cross-sectional view of the flow path device at position A-A as viewed in the positive Y-direction.
FIG. 4 is a schematic imaginary example cross-sectional view of the flow path device at position B-B as viewed in the positive Y-direction.
FIG. 5 is a schematic imaginary example cross-sectional view of the flow path device at position E-E as viewed in the positive Y-direction.
FIG. 6 is a schematic plan view of an example connector.
FIG. 7 is a schematic imaginary example cross-sectional view of the flow path device at position C-C as viewed in the direction perpendicular to the positive Z-direction.
FIG. 8 is a schematic imaginary example cross-sectional view of the flow path device at position D-D as viewed in the negative X-direction.
FIG. 9 is a schematic imaginary example cross-sectional view of the flow path device at position F-F as viewed in the negative X-direction.
FIG. 10 is a schematic plan view of an example separating device.
FIG. 11 is a plan view of a rectangular area M surrounded by the dot-dash line in FIG. 10.
FIG. 12 is a flowchart of an example process of counting separating target particles by optical measurement.
FIG. 13 is a schematic partial plan view of the processing device immediately after the processing in step S2 in the flowchart in FIG. 12 ends.
FIG. 14 is a schematic partial plan view of the processing device immediately after the processing in step S4 in the flowchart in FIG. 12 ends.
FIG. 15 is a schematic partial plan view of the processing device immediately after the processing in step S5 in the flowchart in FIG. 12 ends.
FIG. 16 is a schematic partial plan view of the processing device immediately after the processing in step S6 in the flowchart in FIG. 12 ends.
FIG. 17 is a schematic partial plan view of the processing device immediately after the processing in step S7 in the flowchart in FIG. 12 ends.
FIG. 18 is a schematic imaginary example cross-sectional view of a first plate and a second plate before being bonded together, corresponding to the cross section in FIG. 3.
FIG. 19 is a cross-sectional view of a rectangular area N surrounded by the dot-dash line in FIG. 18.
FIG. 20 is a cross-sectional view of a rectangular area O surrounded by the dot-dash line in FIG. 3.
FIG. 21 is a schematic plan view of an example measurement flow path and its adjacent area in the processing device.
FIG. 22 is a schematic imaginary example cross-sectional view of the processing device at position G-G in FIGs. 2 and 21 as viewed in the positive Y-direction.
FIG. 23 is a schematic imaginary example cross-sectional view of the first plate and the second plate before being bonded together, corresponding to the cross section in FIG. 22.
FIG. 24 is a schematic partial plan view of the second plate before being bonded.
FIG. 25 is a schematic imaginary example cross-sectional view of the second plate at position H-H in FIG. 24 as viewed in the positive X-direction.
FIG. 26 is a schematic imaginary example cross-sectional view of the processing device at position G-G in FIGs. 2 and 21 as viewed in the positive Y-direction in another example.
FIG. 27 is a schematic imaginary example cross-sectional view of the first plate and the second plate before being bonded together, corresponding to the cross section in FIG. 26.

### DESCRIPTION OF EMBODIMENTS

A known separating processing device includes a separating flow path device joined to a measurement flow path device. The separating flow path device includes a microfluidic flow path (also referred to as a separating flow path) for separating particles of a specific type from a fluid containing particles of multiple types. The measurement flow path device includes a flow path (also referred to as a measurement flow path) for measuring a fluid (sample) containing particles of the specific type separated and collected by the separating flow path device. In the separating processing device, the measurement flow path device includes a first hole for introducing the sample into the measurement flow path and a second hole for collecting the sample from the measurement flow path. The measurement flow path device includes a first plate, made of a resin and including a groove, and a second plate, made of a resin, which are stacked on each other with the second plate covering the groove on the first plate and then are bonded together.

Such a flow path device with an internal measurement flow path defined by a recessed groove on a first plate and by a surface of a second plate may be manufactured by stacking, on a flat second plate, a first plate having a recessed groove on its surface, and bonding the first plate and the second plate together. Before the first plate and the second plate are bonded together, for example, the first plate includes, on its surface for bonding, the recessed groove for defining the measurement flow path and a protruding portion for bonding (also referred to as a bonding protruding portion) around and along the recessed groove, and the second plate includes, on its surface for bonding, a recessed portion for bonding (also referred to as a bonding recessed portion) at a position facing the bonding protruding portion. The first plate and the second plate may be, for example, stacked on each other with the bottom of the bonding recessed portion in contact with the distal end of the bonding protruding portion, and the bonding protruding portion may be bonded to the bonding recessed portion by, for example, ultrasonic welding to bond the first plate and the second plate together.

When the first plate and the second plate are bonded together, portions of the melted bonding protruding portion may enter the measurement flow path and solidify. Such solidified portions may be included in the sample as impurities in the measurement flow path. This may lower the accuracy of a predetermined measurement process such as counting the number of particles of a specific type (count detection) on the sample introduced into the measurement flow path. The sample with such impurities may also lower the purity of the introduced sample.

One method for reducing the melted bonding protruding portion that enters the measurement flow path when bonding the first plate and the second plate together may be to space, by a short distance, a portion (also referred to as a bonded portion) in which the bonding recessed portion and the bonding protruding portion are bonded from the measurement flow path. With this method, the measurement flow path device includes a portion (also referred to as a non-bonded portion) in which the first plate and the second plate are in contact with or adjacent to each other without being bonded together between the bonded bonding protruding portion and the measurement flow path with the measurement flow path in between. The non-bonded portion includes a microscopic space between the first plate and the second plate.

In the measurement flow path device, a liquid, which is a type of a fluid, may be introduced from, for example, a portion of the measurement flow path nearer the first hole to a portion between an area continuous with the first hole and an area continuous with the second hole. For example, a dispersing fluid for dispersing particles of a specific type may be introduced into the measurement flow path in advance to allow particles of the specific type to be introduced from the separating flow path device into the measurement flow path through the first hole. When the fluid containing particles of multiple types is blood and particles of the specific type are white blood cells, the dispersing fluid may be a liquid, as a type of liquid, mainly containing phosphate buffered saline (PBS). For example, to disperse white blood cells as particles of the specific type sufficiently in the dispersing fluid, a fluid may be moved back and forth repeatedly using another flow path continuous with the portion of the measurement flow path nearer the first hole. This involves a mixing process of repeating operations of moving the dispersing fluid from the portion nearer the first hole to a portion nearer the second hole in the measurement flow path and moving the dispersing fluid from the portion nearer the second hole to the portion nearer the first hole.

However, the liquid may immediately reach the second hole in the measurement flow path unintendedly through, for example, capillary action in the non-bonded portion.

When the liquid introduced into the measurement flow path has lower viscosity, for example, the liquid reaching the second hole is continuously discharged outside the measurement flow path device through the second hole. The measurement flow path thus holds less liquid than to be held, possibly increasing the concentration of particles of the specific type in the sample. This may lower, for example, the accuracy of the predetermined measurement process such as counting particles of the specific type (count detection) on the sample introduced into the measurement flow path.

To maintain a constant concentration of particles of the specific type in the sample in the measurement flow path, for example, the dispersing fluid may be added to fill the measurement flow path to a predetermined position between the portion nearer the first hole and the portion nearer the second hole with the sample. For example, when the sample is collected from the measurement flow path through the second hole and the liquid introduced into the measurement flow path has lower viscosity, the liquid reaching the second hole through capillary action in the non-bonded portion is continuously discharged outside the measurement flow path device through the second hole. Thus, the liquid as the dispersing fluid may be collected before the sample is collected. The collected sample, for example, may then be diluted with the previously collected liquid, thus lowering the concentration of particles of the specific type in the collected sample. This may cause issues when, for example, the collected sample undergoes various processes.

When the liquid introduced into the measurement flow path has higher viscosity, for example, the liquid reaching the second hole through capillary action in the non-bonded portion blocks the second hole. In this case, for example, air is enclosed between a portion of the liquid reaching the second hole and the liquid introduced from the portion of the measurement flow path nearer the first hole to a portion between the area continuous with the first hole and the area continuous with the second hole. The mixing process described above may cause, for example, a portion of the liquid reaching the second hole to form bubbles. The sample may thus include bubbles in the measurement flow path. This may lower, for example, the accuracy of the predetermined measurement process such as counting particles of the specific type (count detection) on the sample introduced into the measurement flow path. For example, hemispherical bubbles may adhere to an inlet of a tube (referred to as a collection tube) below the second hole for collecting the sample discharged through the second hole. The sample discharged through the second hole may thus move along the surfaces of the hemispherical bubbles and may drop beside the collection tube. This may cause inappropriate collection of the sample from the measurement flow path.

As described above, issues may occur when a liquid immediately reaches the second hole in the measurement flow path unintendedly through capillary action in the non-bonded portion.

Such issues may be common to flow path devices including internal flow paths defined by two plates bonded together.

Thus, flow path devices may be improved to reduce the likelihood of a liquid unintendedly reaching the second hole when introduced into an internal flow path from a portion nearer the first hole to a portion between an area continuous with the first hole and an area continuous with the second hole.

The inventor of the present disclosure has developed a technique for a flow path device to reduce a liquid unintendedly reaching the second hole when the liquid is introduced into a flow path from a portion nearer the first hole to a portion between an area continuous with the first hole and an area continuous with the second hole.

An embodiment and examples will now be described with reference to the drawings. In the drawings, the same reference numerals denote the components with the same or similar structures and functions. The components with the same or similar structures and functions will not be described repeatedly. The drawings are schematic.

The drawings may include the right-handed XYZ coordinate system for convenience. The positive Z-direction herein is defined as the vertically upward direction (or simply the upward direction). The vertically downward direction is also referred to as the negative Z-direction. The direction opposite to X-direction is also referred to as the negative X-direction. The direction opposite to Y-direction is also referred to as the negative Y-direction.

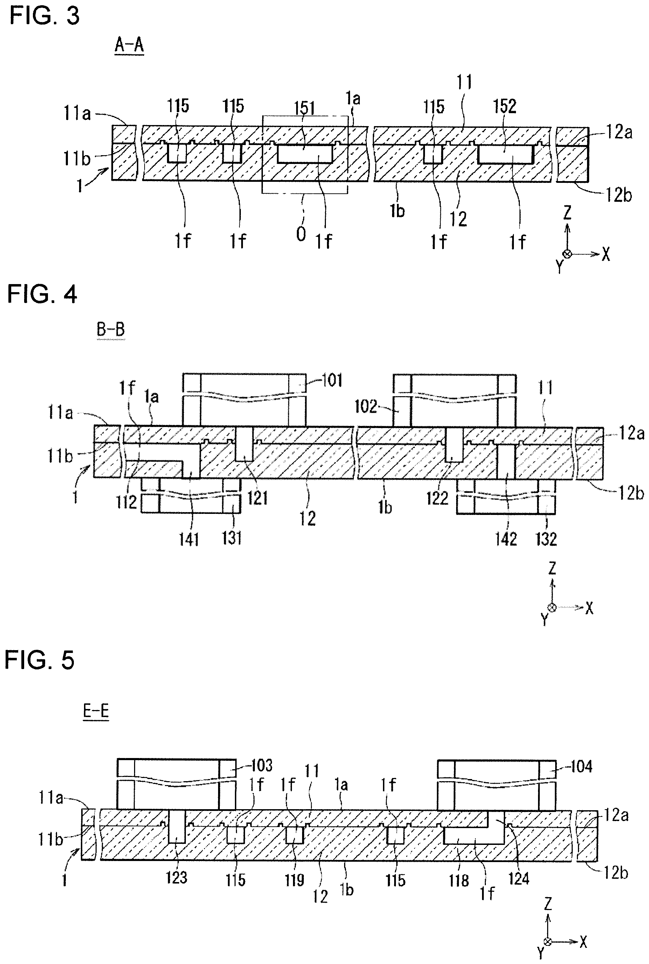

FIGs. 3 to 5, 7 to 9, and 18 are each a partially cut cross-sectional view of the processing device.

The flow path herein has the structure that allows a fluid to flow. The dimension of the flow path in the direction orthogonal to the direction in which the flow path extends is referred to as the width of the flow path.

### 1. Example Schematic Structure of Flow Path Device

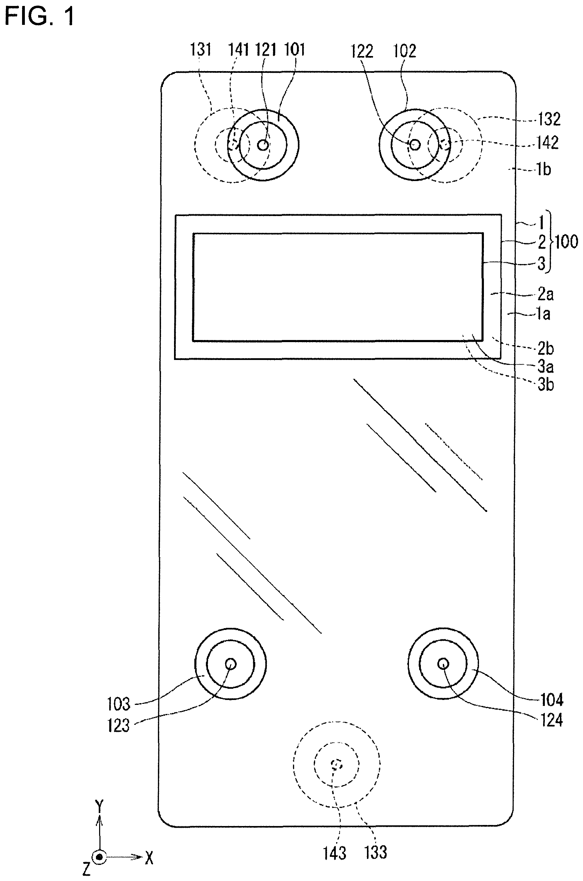

FIG. 1 is a plan view of an example flow path device 100 as a separating processing device according to an embodiment.

The flow path device 100 includes a processing device 1 as a first flow path device, a connector 2, and a separating device 3 as a second flow path device. The processing device 1, the connector 2, and the separating device 3 are stacked on one another in this order in the positive Z-direction. In other words, the connector 2 is located on the processing device 1, and the separating device 3 is located on the connector 2.

The processing device 1 includes a surface (also referred to as a first upper surface) 1a and a surface (also referred to as a first lower surface) 1b. The first upper surface 1a is located in the positive Z-direction from the first lower surface 1b.

The connector 2 includes a surface (also referred to as a second upper surface) 2a and a surface (also referred to as a second lower surface) 2b. The second upper surface 2a is located in the positive Z-direction from the second lower surface 2b. The second lower surface 2b is in contact with the first upper surface 1a. The second lower surface 2b is bonded to the first upper surface 1a with, for example, plasma or light.

The separating device 3 includes a surface (also referred to as a third upper surface) 3a and a surface (also referred to as a third lower surface) 3b. The third upper surface 3a is located in the positive Z-direction from the third lower surface 3b. The separating device 3 is located above the first upper surface 1a of the processing device 1. More specifically, the connector 2 is between the third lower surface 3b of the separating device 3 and the first upper surface 1a of the processing device 1. The third lower surface 3b of the separating device 3 is in contact with the second upper surface 2a of the connector 2. The third lower surface 3b is bonded to the second upper surface 2a with, for example, plasma or light. For bonding with plasma, for example, oxygen plasma is used. For bonding with light, for example, ultraviolet light from an excimer lamp is used.

Each of the processing device 1, the connector 2, and the separating device 3 is a rectangular plate as viewed in plan (hereafter, as viewed in the negative Z-direction unless otherwise specified). The first upper surface 1a, the first lower surface 1b, the second upper surface 2a, the second lower surface 2b, the third upper surface 3a, and the third lower surface 3b are perpendicular to the positive Z-direction.

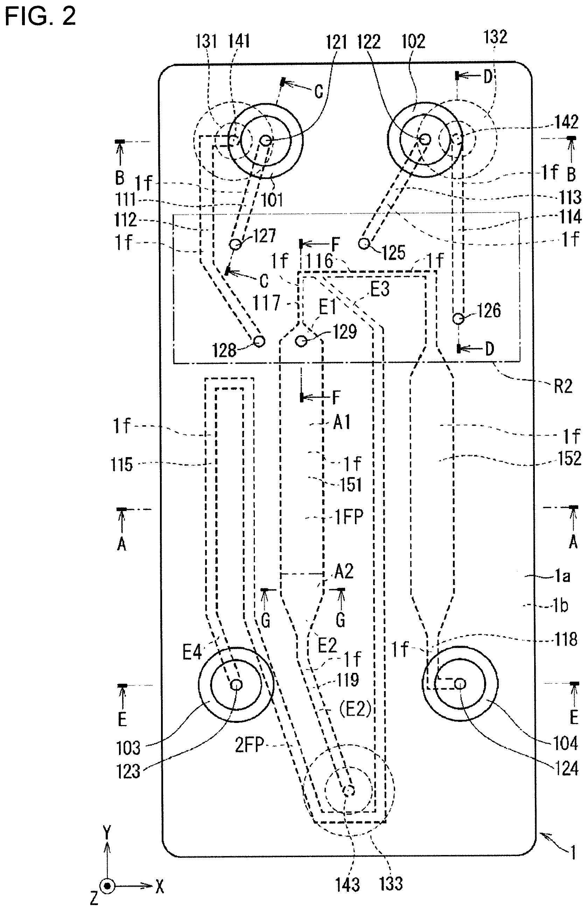

FIG. 2 is a schematic plan view of the processing device 1. In FIG. 2, a rectangular area R2 surrounded by the dot-dash line is an area in which the second lower surface 2b of the connector 2 is bonded on the first upper surface 1a.

The processing device 1 has a thickness of, for example, about 0.5 to 5 millimeters (mm). The thickness of the processing device 1 refers to the dimension of the processing device 1 in the positive Z-direction. The first upper surface 1a and the first lower surface 1b each have a width of, for example, about 10 to 50 mm. The width of the first upper surface 1a refers to the dimension of the first upper surface 1a in the positive X-direction. The width of the first lower surface 1b refers to the dimension of the first lower surface 1b in the positive X-direction. The first upper surface 1a and the first lower surface 1b each have a length of, for example, about 20 to 100 mm. The length of the first upper surface 1a refers to the dimension of the first upper surface 1a in the positive Y-direction. The length of the first lower surface 1b refers to the dimension of the first lower surface 1b in the positive Y-direction.

The processing device 1 includes six inlet holes 121, 122, 124, 126, 128, and 129, two outlet holes 125 and 127, and a mixing hole 123. The three inlet holes 126, 128, and 129 and the two outlet holes 125 and 127 are open in the first upper surface 1a in the area R2. The three inlet holes 121, 122, and 124 and the mixing hole 123 are open in the first upper surface 1a outside the area R2. In other words, the six inlet holes 121, 122, 124, 126, 128, and 129, the two outlet holes 125 and 127, and the mixing hole 123 are not open in the first lower surface 1b.

The processing device 1 includes three outlet holes 141, 142, and 143. The three outlet holes 141, 142, and 143 are open in the first lower surface 1b outside the area R2. In other words, the outlet holes 141, 142, and 143 are not open in the first upper surface 1a.

The processing device 1 includes multiple flow paths 1f. The multiple flow paths 1f include a mixing flow path 115, eight flow paths 111, 112, 113, 114, 116, 117, 118, and 119, a measurement flow path 151, and a reference flow path 152. The multiple flow paths 1f are grooves that are not open in either the first upper surface 1a or the first lower surface 1b.

The flow path 111 is continuous with the inlet hole 121 and the outlet hole 127. A first portion being continuous with a second portion refers to the first portion being directly continuous with the second portion to allow a fluid to flow between the first portion and the second portion or refers to the first portion being continuous with the second portion through another portion (also referred to as a third portion) to allow a fluid to flow between the first portion and the second portion. The first portion, the second portion, and the third portion herein are portions in which a fluid can flow, such as flow paths or holes. The third portion may be a combination of two or more flow paths, a combination of one or more flow paths and one or more holes, or a combination of two or more holes. The flow path 112 is continuous with the inlet hole 128 and the outlet hole 141. The flow path 113 is continuous with the inlet hole 122 and the outlet hole 125. The flow path 114 is continuous with the inlet hole 126 and the outlet hole 142.

The measurement flow path 151 is a flow path (also referred to as a first flow path) 1FP between the flow path 117 and the flow path 119. The measurement flow path 151 is elongated in a longitudinal direction (also referred to as a first longitudinal direction). The first longitudinal direction is the direction in which the measurement flow path 151 extends. In the example in FIG. 2, the first longitudinal direction is parallel to the negative Y-direction from the flow path 117 toward the flow path 119. In other words, the measurement flow path 151 extends in the negative Y-direction. The measurement flow path 151 has an end in the positive Y-direction continuous with the flow path 117 and an end in a direction opposite to the positive Y-direction (in the negative Y-direction) continuous with the flow path 119. The measurement flow path 151 is continuous with the flow path 117 in the area R2 as viewed in plan.

The measurement flow path 151 includes an area (also referred to as a first end area) E1 located at one end in the first longitudinal direction and an area (also referred to as a second end area) E2 at the other end opposite to the first end area E1 in the first longitudinal direction. In other words, the measurement flow path 151 includes the first end area E1 and the second end area E2 opposite to each other in the first longitudinal direction. In the example in FIG. 2, the first end area E1 is located at the end of the measurement flow path 151 in the positive Y-direction, and the second end area E2 is located at the end of the measurement flow path 151 in the negative Y-direction. The measurement flow path 151 is continuous with the inlet hole 129 in the first end area E1. In other words, the inlet hole 129 is continuous with the first end area E1 in the measurement flow path 151. The inlet hole 129 (also referred to as a first hole) is thus continuous with the measurement flow path 151 and open in the first upper surface 1a.

The measurement flow path 151 is continuous with the flow path 117 in the first end area E1. In the example in FIG. 2, the measurement flow path 151 includes the first end area E1 continuous with the mixing flow path 115 through the flow path 117 and a part of the flow path 116. A first portion being continuous with a second portion refers to the first portion being directly continuous with the second portion to allow a fluid to flow between the first portion and the second portion or refers to the first portion being continuous with the second portion through another portion (a third portion) to allow a fluid to flow between the first portion and the second portion. The measurement flow path 151 thus includes the first end area E1 continuous with the mixing flow path 115. In other words, the mixing flow path 115 is continuous with the first end area E1 in the measurement flow path 151.

The flow path 116 is between the flow path 117 and the reference flow path 152 and is continuous with the mixing flow path 115 between the flow path 117 and the reference flow path 152. The flow path 117 is between the measurement flow path 151 and the flow path 116. The flow path 118 is continuous with the inlet hole 124 and is between the inlet hole 124 and the reference flow path 152. The flow path 119 is between the outlet hole 143 and the measurement flow path 151 and is continuous with the outlet hole 143. The outlet hole 143 (also referred to as a second hole) is thus continuous with the measurement flow path 151 through the flow path 119 and open in the first lower surface 1b. More specifically, the outlet hole 143 is continuous with the second end area E2 in the measurement flow path 151 through the flow path 119. In other words, the outlet hole 143 is continuous with the second end area E2 in the measurement flow path 151.

The mixing flow path 115 is a flow path (also referred to as a second flow path) 2FP between the mixing hole 123 and the flow path 116. The mixing flow path 115 is elongated in a longitudinal direction (also referred to as a second longitudinal direction). The second longitudinal direction is the direction in which the mixing flow path 115 extends. The mixing flow path 115 bends in the example in FIG. 2. More specifically, the mixing flow path 115 extends in different directions from the mixing hole 123 to the flow path 116, extending in the positive Y-direction, in the positive X-direction, in the negative Y-direction, in the positive X-direction, and in the positive Y-direction in this order.

The mixing flow path 115 includes an area (also referred to as a third end area) E3 at one end in the second longitudinal direction and an area (also referred to as a fourth end area) E4 at the other end opposite to the third end area E3 in the second longitudinal direction. In other words, the mixing flow path 115 includes the third end area E3 and the fourth end area E4 opposite to each other in the second longitudinal direction. The mixing flow path 115 is continuous with the measurement flow path 151 in the third end area E3 through a part of the flow path 116 and the flow path 117. In other words, the third end area E3 in the mixing flow path 115 is continuous with the measurement flow path 151. The mixing flow path 115 is continuous with the mixing hole 123 in the fourth end area E4. The mixing hole 123 (also referred to as a third hole) is thus continuous with the fourth end area E4 in the mixing flow path 115 and open in the first upper surface 1a.

The reference flow path 152 is between the flow path 116 and the flow path 118. The reference flow path 152 extends in the positive Y-direction. The reference flow path 152 has an end in the positive Y-direction continuous with the flow path 116 and an end in the direction opposite to the positive Y-direction (in the negative Y-direction) continuous with the flow path 118. In the example in FIG. 2, the measurement flow path 151 and the reference flow path 152 both extend in the positive Y-direction. However, the measurement flow path 151 and the reference flow path 152 may extend in different directions.

FIGs. 3, 4, and 5 are imaginary cross-sectional views of the flow path device 100.

The processing device 1 includes a first plate 11 and a second plate 12. The first plate 11 and the second plate 12 are stacked on each other. In other words, the second plate 12 is stacked on the first plate 11. In the examples in FIGs. 3, 4, and 5, the first plate 11 and the second plate 12 are stacked in this order in the negative Z-direction. The first plate 11 includes a first surface 11a and a second surface 11b opposite to the first surface 11a. The first surface 11a is located in the positive Z-direction from the second surface 11b. The second plate 12 includes a third surface 12a and a fourth surface 12b opposite to the third surface 12a. The third surface 12a is located in the positive Z-direction from the fourth surface 12b.

The first plate 11 and the second plate 12 are bonded together with the third surface 12a partially bonded to the second surface 11b. The first plate 11 and the second plate 12 thus form the processing device 1 being integral. In the processing device 1, the first surface 11a corresponds to the first upper surface 1a, and the fourth surface 12b corresponds to the second lower surface 2b. The multiple flow paths 1f are defined between the second surface 11b and the third surface 12a. More specifically, the mixing flow path 115, the eight flow paths 111, 112, 113, 114, 116, 117, 118, and 119, the measurement flow path 151, and the reference flow path 152 are defined between the second surface 11b and the third surface 12a. The six inlet holes 121, 122, 124, 126, 128, and 129, the two outlet holes 125 and 127, and the mixing hole 123 extend through the first plate 11. The three outlet holes 141, 142, and 143 extend through the second plate 12.

The mixing flow path 115 extends from the mixing hole 123 substantially in the positive Y-direction, in the positive X-direction by a short distance, substantially in the negative Y-direction, in the positive X-direction by a short distance, substantially in the positive Y-direction, and then to the flow path 116 and is continuous with the flow path 116. The portion of the mixing flow path 115 continuous with the flow path 116 inclines in the negative X-direction with respect to the positive Y-direction as the mixing flow path 115 extends in the positive Y-direction. The portion of the flow path 116 continuous with the mixing flow path 115 extends in the negative X-direction. The flow path 116 and the mixing flow path 115 define a minor angle (also referred to as a first minor angle) at a position nearer the flow path 117 that is greater than a minor angle (also referred to as a second minor angle) defined by the flow path 116 and the mixing flow path 115 at a position opposite to the flow path 117. This structure allows a fluid forced out of the mixing flow path 115 to the flow path 116 to easily move toward the measurement flow path 151 through the flow path 117. A flow path with less bending allows easier flow of a fluid.

The processing device 1 includes four cylinders 101, 102, 103, and 104 protruding from the first upper surface 1a in the positive Z-direction. The cylinder 101 surrounds the inlet hole 121 about Z-axis as viewed in plan. The cylinder 102 surrounds the inlet hole 122 about Z-axis as viewed in plan. The cylinder 103 surrounds the mixing hole 123 about Z-axis as viewed in plan. The cylinder 104 surrounds the inlet hole 124 about Z-axis as viewed in plan.

The processing device 1 includes three cylinders 131, 132, and 133 protruding from the first lower surface 1b in the direction opposite to the positive Z-direction (the negative Z-direction). The cylinder 131 surrounds the outlet hole 141 about Z-axis as viewed in plan. The cylinder 132 surrounds the outlet hole 142 about Z-axis as viewed in plan. The cylinder 133 surrounds the outlet hole 143 about Z-axis as viewed in plan.

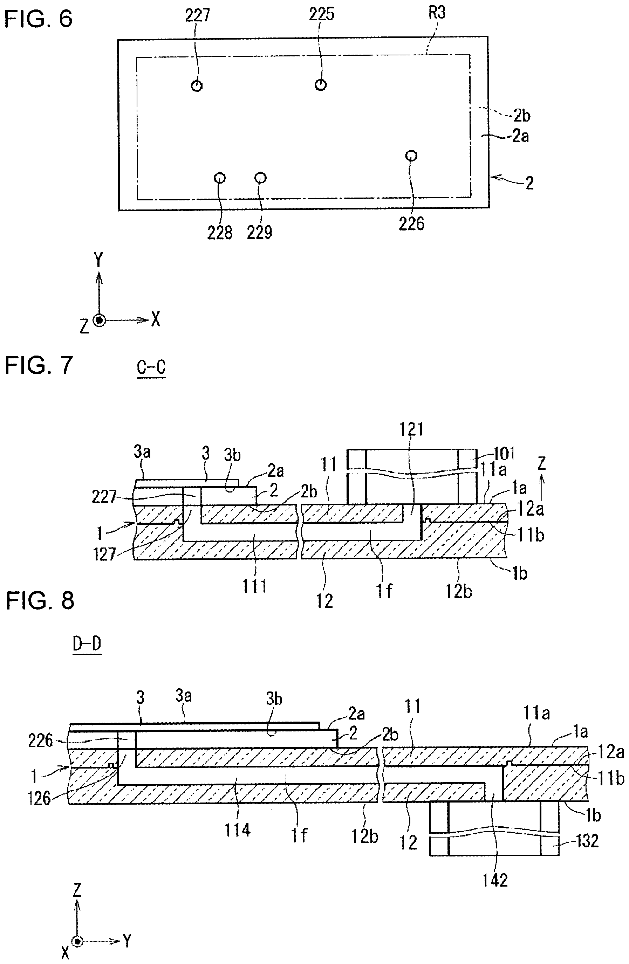

FIG. 6 is a plan view of an example connector 2. In FIG. 6, a rectangular area R3 surrounded by the dot-dash line is an area in which the third lower surface 3b is bonded.

The connector 2 includes five through-holes 225, 226, 227, 228, and 229. The five through-holes 225, 226, 227, 228, and 229 extend through from the second upper surface 2a to the second lower surface 2b in the area R3.

FIGs. 7, 8, and 9 are imaginary cross-sectional views of the flow path device 100.

The separating device 3 includes the third upper surface 3a as a fifth surface and the third lower surface 3b opposite to the third upper surface 3a as a sixth surface. The separating device 3 includes the third upper surface 3a opposite to the first upper surface 1a and the third lower surface 3b nearer the first upper surface 1a. The connector 2 is between the third lower surface 3b of the separating device 3 and the first upper surface 1a of the processing device 1. The connector 2 is, for example, a sheet.

The through-hole 225 is continuous with the outlet hole 125. The through-hole 225 is continuous with the inlet hole 122 through the outlet hole 125 and the flow path 113 in this order. The through-hole 226 is continuous with the inlet hole 126. The through-hole 226 is continuous with the outlet hole 142 through the inlet hole 126 and the flow path 114 in this order. The through-hole 227 is continuous with the outlet hole 127. The through-hole 227 is continuous with the inlet hole 121 through the outlet hole 127 and the flow path 111 in this order. The through-hole 228 is continuous with the inlet hole 128. The through-hole 228 is continuous with the outlet hole 141 through the inlet hole 128 and the flow path 112 in this order. The through-hole 229 is continuous with the inlet hole 129. The through-hole 229 is continuous with the measurement flow path 151 through the inlet hole 129.

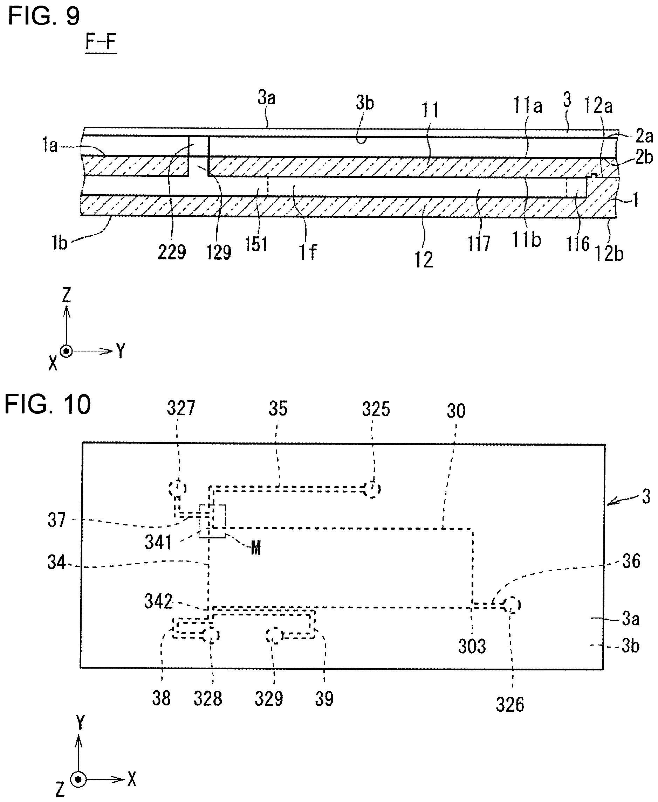

FIG. 10 is a plan view of an example separating device 3.

The separating device 3 has a thickness (a dimension in the positive Z-direction) of, for example, about 1 to 5 mm. The third upper surface 3a and the third lower surface 3b each have a width of, for example, about 10 to 50 mm. The width of the third upper surface 3a refers to the dimension of the third upper surface 3a in the positive X-direction. The width of the third lower surface 3b refers to the dimension of the third lower surface 3b in the positive X-direction. The third upper surface 3a and the third lower surface 3b each have a length of, for example, about 10 to 30 mm. The length of the third upper surface 3a refers to the dimension of the third upper surface 3a in the positive Y-direction. The length of the third lower surface 3b refers to the dimension of the third lower surface 3b in the positive Y-direction.

The separating device 3 includes two inlet holes 325 and 327, three outlet holes 326, 328, and 329, a separating flow path 30, and five flow paths 35, 36, 37, 38, and 39. The two inlet holes 325 and 327 and the three outlet holes 326, 328, and 329 are not open in the third upper surface 3a and are open in the third lower surface 3b as the sixth surface. The separating flow path 30 and the five flow paths 35, 36, 37, 38, and 39 are grooves that are not open in the third upper surface 3a and are open in the third lower surface 3b. In other words, the separating flow path 30 and the five flow paths 35, 36, 37, 38, and 39 are grooves that are not open in the third upper surface 3a as the fifth surface.

The third lower surface 3b of the separating device 3 is in contact with the second upper surface 2a excluding portions with the two inlet holes 325 and 327, the three outlet holes 326, 328, and 329, the separating flow path 30, and the five flow paths 35, 36, 37, 38, and 39. A fluid does not move into between the third lower surface 3b and the second upper surface 2a that are in contact with each other. The separating flow path 30 and the five flow paths 35, 36, 37, 38, and 39, together with the second upper surface 2a, allow a fluid to move.

The separating flow path 30 includes a main flow path 34 and an output port 303. The main flow path 34 includes an input port 341 and an output port 342. The main flow path 34 extends in the negative Y-direction from the input port 341 to the output port 342.

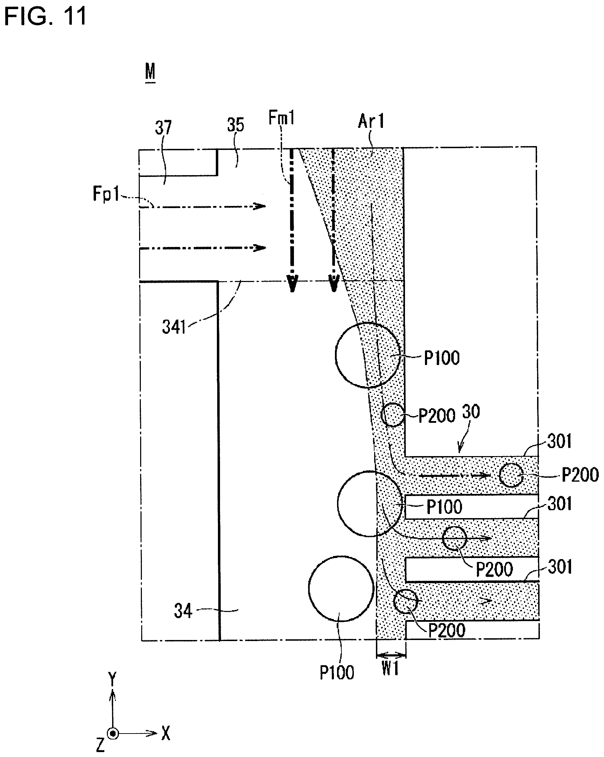

FIG. 11 partially illustrates the separating device 3. In FIG. 11, the separating flow path 30 and the two flow paths 35 and 37 are indicated by the solid lines for ease of illustration.

The separating flow path 30 includes multiple branch flow paths 301. The branch flow paths 301 branch from the main flow path 34 at different positions in the positive Y-direction. The branch flow paths 301 extend in the positive X-direction. The branch flow paths 301 are each continuous with the output port 303 opposite to the main flow path 34.

The inlet hole 325 is continuous with the through-hole 225. The inlet hole 325 is continuous with the inlet hole 122 through the through-hole 225, the outlet hole 125, and the flow path 113 in this order. In other words, the connector 2 includes the through-hole 225 connecting the inlet hole 325 and the outlet hole 125.

The inlet hole 327 is continuous with the through-hole 227. The inlet hole 327 is continuous with the inlet hole 121 through the through-hole 227, the outlet hole 127, and the flow path 111 in this order. In other words, the connector 2 includes the through-hole 227 connecting the inlet hole 327 and the outlet hole 127.

The outlet hole 326 is continuous with the through-hole 226. The outlet hole 326 is continuous with the outlet hole 142 through the through-hole 226, the inlet hole 126, and the flow path 114 in this order. In other words, the connector 2 includes the through-hole 226 connecting the outlet hole 326 and the inlet hole 126.

The outlet hole 328 is continuous with the through-hole 228. The outlet hole 328 is continuous with the outlet hole 141 through the through-hole 228, the inlet hole 128, and the flow path 112 in this order. In other words, the connector 2 includes the through-hole 228 connecting the outlet hole 328 and the inlet hole 128.

The outlet hole 329 (also referred to as a fourth hole) is continuous with the through-hole 229. The outlet hole 329 is continuous with the measurement flow path 151 through the through-hole 229 and the inlet hole 129 in this order. In other words, the outlet hole 329 as the fourth hole is continuous with the inlet hole 129 as the first hole. In still other words, the connector 2 includes the through-hole 229 connecting the outlet hole 329 as the fourth hole and the inlet hole 129 as the first hole.

The flow path 35 connects the inlet hole 325 and the input port 341. The flow path 35 is continuous with the main flow path 34 at the input port 341. The flow path 35 extends in the negative Y-direction and is continuous with the input port 341. The flow path 35 extends in the negative Y-direction near the input port 341.

The flow path 37 extends in the positive X-direction and is continuous with the portion of the flow path 35 extending in the negative Y-direction near the input port 341. The inlet hole 327 is continuous with the main flow path 34 through the flow path 37.

The flow path 36 connects the outlet hole 326 and the output port 303. The flow path 36 extends in the positive X-direction.

The flow path 38 connects the outlet hole 328 and the output port 342. The flow path 38 extends in the positive Y-direction and is continuous with the output port 342. The flow path 38 extends from the output port 342 in the negative Y-direction, in the negative X-direction, in the negative Y-direction, and then in the positive X-direction to the outlet hole 328 in this order.

The flow path 39 extends in the negative X-direction and is continuous with the portion of the flow path 38 extending in the negative Y-direction near the output port 342. The outlet hole 329 is continuous with the output port 342 through the flow path 39. In other words, the outlet hole 329 is continuous with the separating flow path 30 through the flow path 39 and a part of the flow path 38. The outlet hole 329 is thus continuous with the separating flow path 30. The flow path 39 extends from the flow path 38 in the positive X-direction, in the negative Y-direction, and then in the negative X-direction to the outlet hole 329 in this order.

### 2. Overall Example Functions of Flow Path Device

The functions of the flow path device 100 are roughly described below.

A fluid (also referred to as a processing target fluid; refer to FIG. 11) containing particles P100 and P200 of multiple types is introduced into the separating device 3. The separating device 3 separates the separating target particles P100 as particles of a specific type from the particles P200 of the other type (also referred to as non-target particles) and discharges the separating target particles P 100. The fluid may contain particles of three or more types. In the example described below, the separating target particles P100 are of a single type, and the non-target particles P200 are of another single type.

The processing device 1 is used to perform a predetermined process on the separating target particles P 100. An example of the predetermined process is counting the number of separating target particles P100 (count detection). To describe the process, the separating target particles P100 and the fluid containing the separating target particles P100 are both hereafter also referred to as a sample. The fluid containing the separating target particles P100 is hereafter also referred to as a particle-containing fluid.

The connector 2 guides the separating target particles P100 (more specifically, the sample) discharged from the separating device 3 to the processing device 1.

A pressing fluid is introduced into the flow path device 100 through the inlet hole 121. A processing target fluid is introduced into the flow path device 100 through the inlet hole 122. A mixing fluid is fed into the flow path device 100 through the mixing hole 123. The mixing fluid is discharged from the flow path device 100 through the mixing hole 123. A dispersing fluid is introduced into the flow path device 100 through the inlet hole 124. Specific examples and the functions of the pressing fluid, the mixing fluid, and the dispersing fluid are described later.

A tube is externally connectable to the flow path device 100 to introduce the pressing fluid into the flow path device 100 through the inlet hole 121 using the cylinder 101.

A tube is externally connectable to the flow path device 100 to introduce the processing target fluid into the flow path device 100 through the inlet hole 122 using the cylinder 102.

A tube is externally connectable to the flow path device 100 to feed and discharge the mixing fluid into and from the flow path device 100 through the mixing hole 123 using the cylinder 103.

A tube is externally connectable to the flow path device 100 to introduce the dispersing fluid into the flow path device 100 through the inlet hole 124 using the cylinder 104.

The processing target fluid introduced into the flow path device 100 through the inlet hole 122 flows through the flow path 113, the outlet hole 125, the through-hole 225, the inlet hole 325, the flow path 35, and the input port 341 in this order, and then flows into the main flow path 34.

The pressing fluid introduced into the flow path device 100 through the inlet hole 121 flows through the flow path 111, the outlet hole 127, the through-hole 227, the inlet hole 327, and the flow path 37 in this order, and then flows into the main flow path 34.

In FIG. 11, arrows Fp1 drawn with the two-dot-dash lines indicate the direction of the flow of the pressing fluid. The direction is the positive X-direction. The pressing fluid is a liquid in the embodiment. In FIG. 11, arrows Fm1 drawn with the two-dot-dash lines thicker than arrows Fp1 indicate the direction of the main flow of the processing target fluid in the main flow path 34. The direction is the negative Y-direction.

FIG. 11 schematically illustrates the separating target particles P100 with a greater diameter than the non-target particles P200 being separated from the non-target particles P200. More specifically, for example, the branch flow paths 301 each have a width, for example, greater than the diameter of the non-target particles P200 and smaller than the diameter of the separating target particles P100. The width of each branch flow path 301 refers to the dimension of the branch flow path 301 in Y-direction.

At least the main flow path 34 and the flow path 35 each have a width greater than the diameter of the separating target particles P100 and the diameter of the non-target particles P200. The width of the main flow path 34 refers to the dimension of the main flow path 34 in X-direction. The width of the flow path 35 refers to the dimension of the flow path 35 in X-direction for its portion near the main flow path 34. The width of the flow path 35 refers to the dimension of the flow path 35 in Y-direction for its portion extending in the negative X-direction.

The non-target particles P200 move along the main flow path 34 in the negative Y-direction and mostly flow into the branch flow paths 301. The non-target particles P200 mostly flow through the branch flow paths 301, the output port 303, the flow path 36, the outlet hole 326, the through-hole 226, the inlet hole 126, and the flow path 114 in this order, and are then discharged through the outlet hole 142.

The branch flow paths 301 continuous with the main flow path 34 each have a cross-sectional area and a length adjusted to cause the non-target particles P200 to flow from the main flow path 34 into the branch flow paths 301 and to be separated from the separating target particles P100. The non-target particles P200 discharged through the outlet hole 142 may or may not undergo a specific process.

The separating target particles P100 move along the main flow path 34 in the negative Y-direction substantially without flowing into the branch flow paths 301. The separating target particles P100 mostly flow through the main flow path 34, the output port 342, the flow path 39, the outlet hole 329, the through-hole 229, and the inlet hole 129 in this order, and then flow into the measurement flow path 151. The inlet hole 129 as the first hole is open in the first surface 11a. Thus, when the processing device 1 is used with the first surface 11a facing upward and the fourth surface 12b facing downward, the sample may be easily introduced from above into the measurement flow path 151 through the inlet hole 129 as the first hole.

In one embodiment, the separating device 3 including the third upper surface 3a and the third lower surface 3b is located on the first surface 11a of the processing device 1. The separating device 3 includes the separating flow path 30 being a groove that is not open in the third upper surface 3a and the outlet hole 329. The outlet hole 329 in the separating device 3 is continuous with the inlet hole 129. Thus, when the processing target fluid is introduced into the separating flow path 30 in the separating device 3, for example, the fluid (sample) containing the separating target particles P100 separated from the processing target fluid in the separating flow path 30 may be fed into the measurement flow path 151 in the processing device 1 through the outlet hole 329 and the inlet hole 129. This may allow, for example, separating of the sample from the processing target fluid using the separating device 3 and the predetermined process on the separating target particles P100 using the processing device 1 to be performed efficiently.

The flow path 39 has a width greater than the size of the separating target particles P100. The separating target particles P100 flow from the output port 342 into the flow path 39, rather than into the flow path 38, in the same manner as the non-target particles P200 flowing into the branch flow paths 301 from the main flow path 34.

A component of the processing target fluid other than the non-target particles P200 flowing into the branch flow paths 301 and the separating target particles P100 flowing into the flow path 39 flows into the flow path 38. The component flows through the flow path 38, the outlet hole 328, the through-hole 228, the inlet hole 128, and the flow path 112 in this order, and is then discharged through the outlet hole 141. The component discharged through the outlet hole 141 may or may not undergo a specific process.

In one embodiment, the processing target fluid is directed to the branch flow paths 301 using a flow (also referred to as a fluid-drawing flow). The fluid-drawing flow allows the separating target particles P100 to be separated from the non-target particles P200 using the main flow path 34 and the branch flow paths 301. The fluid-drawing flow is indicated by a hatched area Ar1 with a dot pattern in FIG. 11. The state of the fluid-drawing flow indicated by the area Ar1 in FIG. 11 is a mere example and may be changed in accordance with the relationship between the flow velocity and the flow rate of the processing target fluid introduced into the main flow path 34 through the flow path 35 and the flow velocity and the flow rate of the pressing fluid introduced into the flow path 35 through the flow path 37. The area Ar1 may be adjusted as appropriate to efficiently separate the separating target particles P100 and the non-target particles P200 from the processing target fluid. The pressing fluid directs the processing target fluid toward the branch flow paths 301 in the positive X-direction from a position opposite to the branch flow paths 301. The pressing fluid can create the fluid-drawing flow.

In FIG. 11, the fluid-drawing flow in the main flow path 34 has a width W1 near a branch of the main flow path 34 to each branch flow path 301. The width of the fluid-drawing flow in the main flow path 34 refers to the dimension of the fluid-drawing flow in X-direction. The width W1 may be adjusted by, for example, the cross-sectional areas and the lengths of the main flow path 34 and the branch flow paths 301 and the flow rates of the processing target fluid and the pressing fluid.

At the width W1 illustrated in FIG. 11, the area Ar1 of the fluid-drawing flow does not include the center of gravity of each separating target particle P100 and includes the center of gravity of each non-target particle P200.

The processing target fluid is, for example, blood, which is a liquid containing particles of multiple types. In this case, for example, the separating target particles P100 are white blood cells, and the non-target particles P200 are red blood cells. The process on the separating target particles P100 includes, for example, counting white blood cells. The component flowing through the flow path 38 and the outlet hole 328 before being discharged from the separating device 3 is, for example, blood plasma. In this case, the pressing fluid is, for example, phosphate-buffered saline (PBS), which is a liquid. The pressing fluid may be a fluid of PBS containing other elements to allow the pressing fluid to function appropriately for the purpose of using the separating device 3 and the processing device 1. The other elements may be, for example, ethylenediaminetetraacetic acid (EDTA) as a second element and bovine serum albumin (BSA) as a third element.

A red blood cell has the center of gravity at, for example, about 2 to 2.5 micrometers (µm) from its outer rim. A red blood cell has a maximum diameter of, for example, about 6 to 8 µm. A white blood cell has the center of gravity at, for example, about 5 to 10 µm from its outer rim. A white blood cell has a maximum diameter of, for example, about 10 to 30 µm. To effectively separate red blood cells and white blood cells in blood, the fluid-drawing flow has the width W1 of about 2 to 15 µm.

The main flow path 34 has an imaginary cross-sectional area of, for example, about 300 to 1000 square micrometers (µm²) along the XZ plane. The main flow path 34 has a length of, for example, about 0.5 to 20 mm in Y-direction. Each branch flow path 301 has an imaginary cross-sectional area of, for example, about 100 to 500 µm² along the YZ plane. Each branch flow path 301 has a length of, for example, about 3 to 25 mm in X-direction. The flow velocity in the main flow path 34 is, for example, about 0.2 to 5 meters per second (m/s). The flow rate of the fluid in the main flow path 34 is, for example, about 0.1 to 5 microliters per second (µl/s).

The material for the separating device 3 is, for example, a resin such as polydimethylsiloxane (PDMS). PDMS is highly transferable in resin molding using molds. A transferrable material can produce a resin-molded product including fine protrusions and recesses corresponding to a fine pattern on the mold. The separating device 3 is resin-molded using PDMS for easy manufacture of the flow path device 100. The material for the connector 2 is, for example, a resin such as a silicone resin.

The dispersing fluid introduced into the flow path device 100 through the inlet hole 124 flows through the flow path 118, the reference flow path 152, the flow path 116, and the flow path 117 in this order, and then flows into the measurement flow path 151.

The dispersing fluid disperses the separating target particles P100 introduced into the measurement flow path 151 through the inlet hole 129. Dispersing herein is an antonym of clumping or aggregation of the separating target particles P100. Dispersing the separating target particles P100 allows the predetermined process, such as counting as referred to in the embodiment, to be performed easily or accurately, or both easily and accurately. The dispersing fluid is a liquid in the embodiment. The dispersing fluid may be the same fluid as the pressing fluid. For the processing target fluid being blood, the dispersing fluid is, for example, PBS. The dispersing fluid may be a fluid of PBS containing at least one of EDTA as the second element or BSA as the third element.

The mixing fluid introduced into the flow path device 100 through the mixing hole 123 flows into the mixing flow path 115. The mixing fluid flows back and forth through the mixing flow path 115 with an external operation. The mixing fluid is, for example, air. In this case, the air pressure at the mixing hole 123 is controlled to cause the mixing fluid to flow back and forth through the mixing flow path 115.

The mixing fluid is a fluid for mixing the dispersing fluid containing the separating target particles P100 to facilitate dispersion of the sample in the dispersing fluid in an area spanning from the mixing flow path 115 to the measurement flow path 151 through the flow paths 116 and 117. In other words, the mixing fluid is a fluid for mixing the fluid (particle-containing fluid) containing the separating target particles P100 as particles of the specific type. In one embodiment, the particle-containing fluid is a liquid containing particles of a specific type. The mixing fluid may be the same fluid as the dispersing fluid and the pressing fluid. For the processing target fluid being blood, the mixing fluid is, for example, PBS. In this case, PBS flows back and forth through the mixing flow path 115 as it flows into and out of the mixing hole 123. The mixing fluid flowing back and forth through the mixing flow path 115 facilitates mixing of the dispersing fluid and the sample in the mixing flow path 115, in the flow paths 116 and 117, and in at least a part of the measurement flow path 151.

The sample containing particles of the specific type is introduced through the inlet hole 129 into, for example, an area nearer the first end area E1 in the measurement flow path 151. The mixing fluid is repeatedly fed into and discharged from the mixing flow path 115 through the mixing hole 123, thus facilitating mixing of the dispersing fluid and the sample. The dispersing fluid being mixed with the sample can, for example, disperse the separating target particles P100. The mixing fluid may be a fluid of PBS containing at least one of EDTA as the second element or BSA as the third element.

The measurement flow path 151 herein is divided into, for example, an area (also referred to as a first area) A1 including the first end area E1 and an area (also referred to as a second area) A2 including the second end area E2 in the longitudinal direction (first longitudinal direction) of the measurement flow path 151. The first area A1 includes an area into which the fluid (particle-containing fluid) containing the separating target particles P100 as particles of the specific type is introduced through the inlet hole 129 in the measurement flow path 151. The particle-containing fluid includes the dispersing fluid and the sample. The first area A1 also includes an area in which the particle-containing fluid is mixed through movement of the particle-containing fluid in the measurement flow path 151. In this area, the movement occurs as the fluid (mixing fluid) is fed into and discharged from the mixing flow path 115 through the mixing hole 123. In the example in FIG. 2, the thin two-dot-dash line indicates the boundary between the first area A1 and the second area A2.

The sample and the dispersing fluid move toward the flow path 119 through the measurement flow path 151. The mixing fluid, in addition to the sample and the dispersing fluid, may also move toward the flow path 119 through the measurement flow path 151. The measurement flow path 151 is used to perform the predetermined process on the separating target particles P100.

After the predetermined process is performed on the separating target particles P100 in the measurement flow path 151, the sample and the dispersing fluid flow from the measurement flow path 151 through the flow path 119 and are discharged through the outlet hole 143. The outlet hole 143 as the second hole is open in the fourth surface 12b. Thus, when the processing device 1 is used with the first surface 11a facing upward and the fourth surface 12b facing downward, the sample may easily flow from the measurement flow path 151 through the flow path 119 and is discharged through the outlet hole 143. The mixing fluid, in addition to the sample and the dispersing fluid, may also flow from the measurement flow path 151 through the flow path 119 and be discharged through the outlet hole 143. The separating target particles P100 discharged through the outlet hole 143 may or may not undergo a specific process.

The material for the processing device 1 is, for example, a resin such as a cycloolefin polymer (COP). The processing device 1 made of a COP may be less flexible. In this case, the materials for the first plate 11 and the second plate 12 are COPs. The first plate 11 and the second plate 12 may be manufactured by, for example, resin molding.

The separating flow path 30 and the five flow paths 35, 36, 37, 38, and 39, together with the second upper surface 2a, allow a fluid to move. The connector 2 and the separating device 3 are thus to be less flexible. For example, the separating device 3 made of PDMS and the connector 2 made of a silicone resin are flexible. The processing device 1 made of a COP is less flexible and is less likely to deteriorate the function of the separating device 3. The processing device 1 made of, for example, a material that is not easily bonded directly to the material for the separating device 3 can be bonded to the separating device 3 easily with the connector 2.

### 3. Example Use of Flow Path Device

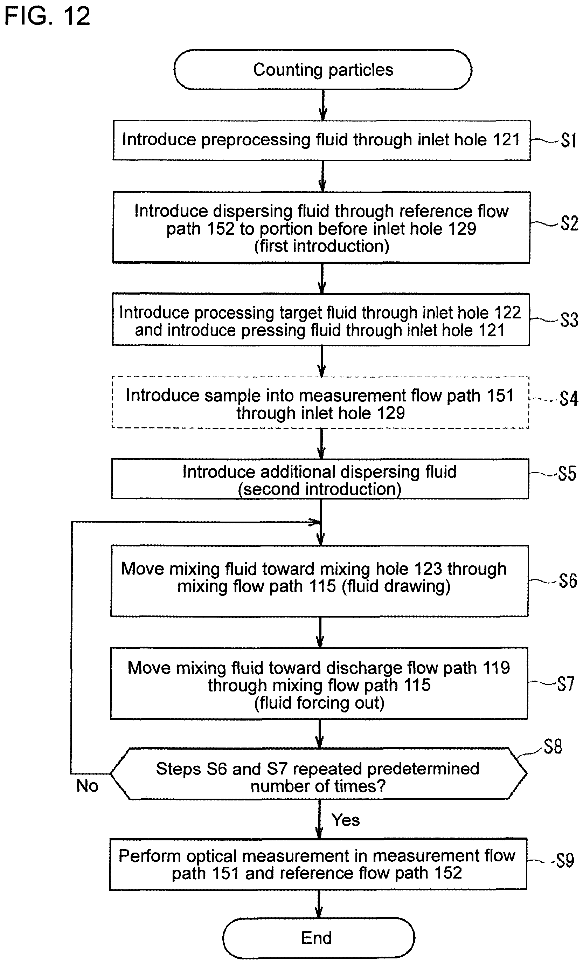

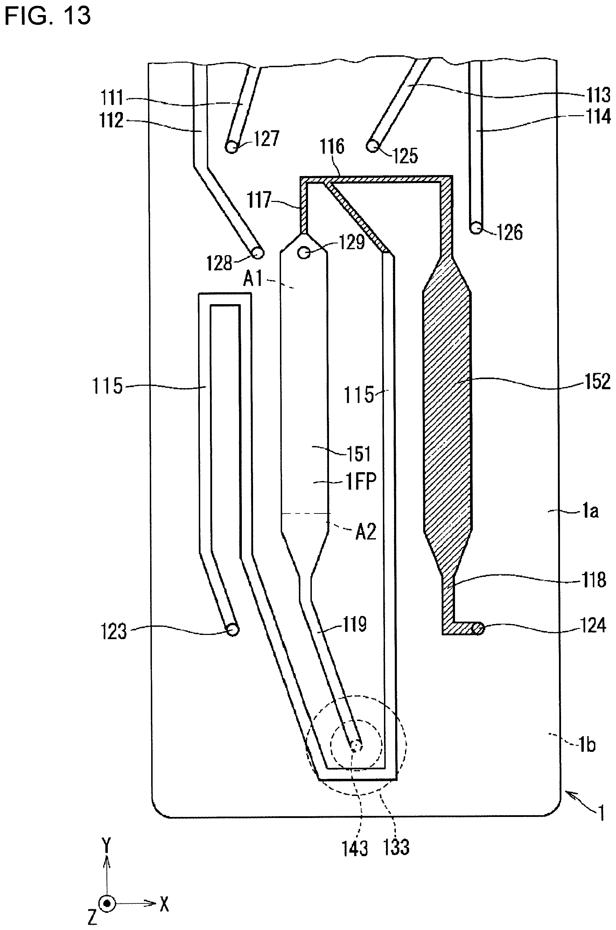

Counting of the separating target particles P100 by optical measurement is described as an example of the predetermined process on the separating target particles P100. FIG. 12 is a flowchart of an example process of counting the number of separating target particles P100 by optical measurement using the flow path device 100. In FIG. 12, counting the number of separating target particles P100 by optical measurement is referred to as optical measurement. FIGs. 13 to 17 each schematically illustrate a part of the processing device 1 during the process. For simplicity, in FIGs. 13 to 17, the elements located in the positive Z-direction from the first lower surface 1b are indicated by the solid lines when the elements are actually hidden under the first upper surface 1a. In FIGs. 13 to 17, the thin two-dot-dash line indicates the boundary between the first area A1 and the second area A2. The sample described with reference to FIGs. 13 to 17 refers to the fluid containing the separating target particles P100.

In step S1, a fluid is introduced into the flow path device 100 through the inlet hole 121 in a process before the processing target fluid is introduced into the flow path device 100. Such a fluid (also referred to as a preprocessing fluid) cleans the flow path device 100 and facilitates movement of the processing target fluid and the sample in the separating device 3. Step S1 may be eliminated.

The preprocessing fluid is introduced into the inlet hole 327 in the separating device 3. For example, the preprocessing fluid also serves as the pressing fluid, and flows through the inlet hole 121, the flow path 111, the outlet hole 127, the through-hole 227, and the inlet hole 327 in this order and reaches the flow path 37.

The preprocessing fluid flows from the flow path 37 through the flow path 35 to at least the inlet hole 325. The preprocessing fluid then flows through the through-hole 225, the outlet hole 125, and the flow path 113 in this order, and is discharged through the inlet hole 122. The preprocessing fluid flows through the flow path 35 and the inlet hole 325 and through the through-hole 225, the outlet hole 125, the flow path 113, and the inlet hole 122 in the direction opposite to the direction of the processing target fluid.

The preprocessing fluid flows from the flow path 37 through the main flow path 34 and the flow path 38 to at least the outlet hole 328. The preprocessing fluid then flows through the through-hole 228, the inlet hole 128, and the flow path 112 in this order, and is discharged through the outlet hole 141.

The preprocessing fluid flows from the flow path 37 through the main flow path 34, the branch flow paths 301, and the flow path 36 in this order to at least the outlet hole 326. The preprocessing fluid then flows through the through-hole 226, the inlet hole 126, and the flow path 114 in this order, and is discharged through the outlet hole 142.

The preprocessing fluid flows from the flow path 37 through the main flow path 34 and the flow path 39 to at least the outlet hole 329. The preprocessing fluid then flows through the through-hole 229 and the inlet hole 129 and reaches the measurement flow path 151. The preprocessing fluid reaching the measurement flow path 151 further flows through the flow path 119 and is discharged through the outlet hole 143.

In step S2, after the processing in step S1 is performed, the dispersing fluid is introduced through the inlet hole 124, the flow path 118, the reference flow path 152, the flow path 116, and the flow path 117 in this order to a portion before the inlet hole 129. The portion before the inlet hole 129 herein refers to a portion nearer the flow path 117 than the inlet hole 129 in the measurement flow path 151 and nearer the measurement flow path 151 than a portion continuous with the mixing flow path 115 in the flow path 116. The processing in step S2 ends when the dispersing fluid flows to the portion before the inlet hole 129. Another dispersing fluid is introduced later, and thus introduction of the dispersing fluid in the processing in step S2 is referred to as first introduction.

In the example in FIG. 13, the dispersing fluid fills the inlet hole 124, the flow path 118, the reference flow path 152, the flow path 116, and the flow path 117. Step S2 is performed to cause the dispersing fluid to flow into the mixing flow path 115 through the flow path 116. In FIG. 13, the area with the dispersing fluid is hatched with diagonal lines from the lower left to the upper right.

In the processing in step S2, the dispersing fluid forces any preprocessing fluid portion remaining in the inlet hole 129 and the measurement flow path 151 before step S2. This causes the preprocessing fluid to be discharged from the measurement flow path 151 through the flow path 119 and the outlet hole 143. The area with the preprocessing fluid is not illustrated in the figure.

In step S3, upon completion of the processing in step S2, the processing target fluid is introduced into the flow path device 100 through the inlet hole 122, and the pressing fluid is introduced through the inlet hole 121. Step S3 is performed to prepare the sample as illustrated in FIG. 11. The sample flows through the flow path 39, the outlet hole 329, the through-hole 229, and the inlet hole 129 in this order and reaches the measurement flow path 151.

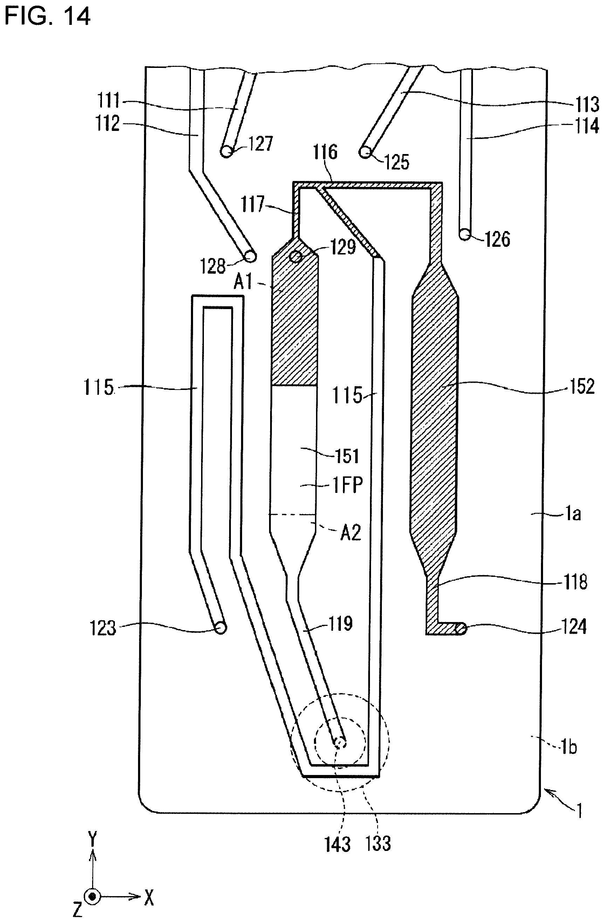

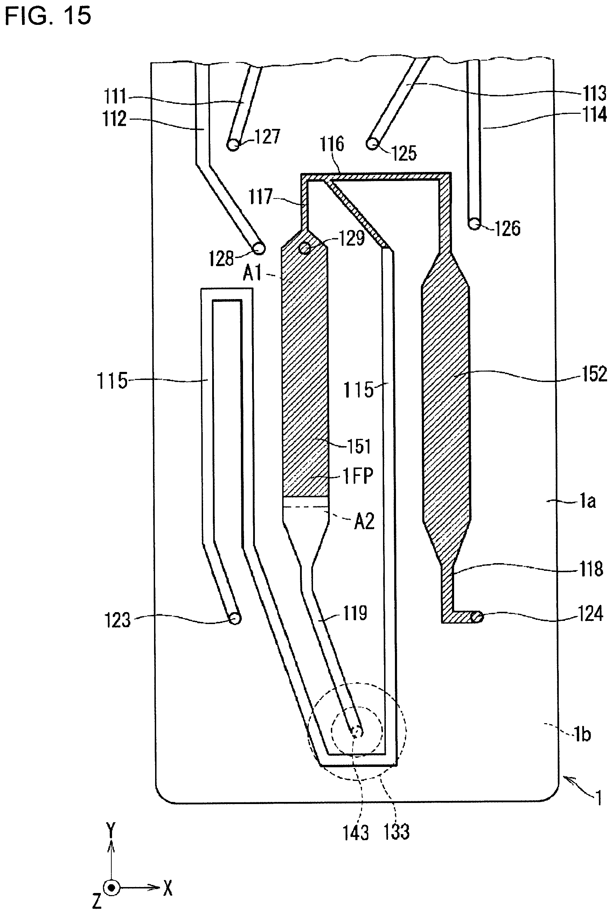

In step S4 in FIG. 12, the sample is introduced through the inlet hole 129 into the measurement flow path 151. This process can accompany the processing in step S3. Step S4 is enclosed in the dashed block, indicating that the processing in step S4 accompanies the processing in step S3. The processing in step S4 ends upon completion of introduction of the sample through the inlet hole 129 into the measurement flow path 151. The processing in step S4 causes the fluid to flow into the measurement flow path 151. In FIG. 14, the area with the fluid is hatched with diagonal lines from the lower left to the upper right without distinguishing the dispersing fluid from the sample. In FIGs. 15 to 17 as well, the area with the fluid is hatched with diagonal lines from the lower left to the upper right without distinguishing the dispersing fluid from the sample. In the example in FIG. 14, the fluid in the measurement flow path 151 is mostly the sample introduced in step S4.

The separating target particles P100 (not illustrated in FIG. 13 and subsequent figures) have not spread widely in the measurement flow path 151 immediately after the processing in step S4 ends. The separating target particles P100 aggregate in a portion of the measurement flow path 151 continuous with the inlet hole 129 and in the inlet hole 129.

Upon completion of the processing in step S4, an additional dispersing fluid is introduced into the flow path device 100 in step S5. Introduction of the dispersing fluid in the processing in step S5 is referred to as second introduction. The dispersing fluid is introduced through the inlet hole 124, the flow path 118, the reference flow path 152, and the flow path 116 in this order to the flow path 117. The dispersing fluid introduced in the first introduction is forced into the measurement flow path 151 by the dispersing fluid introduced in the second introduction. The processing in step S5 ends upon completion of introduction of the dispersing fluid.

The second introduction causes the sample and the dispersing fluid to occupy a larger area in the measurement flow path 151 illustrated in FIG. 15 than in FIG. 14.

The separating target particles P100 spread more widely in the measurement flow path 151 immediately after the processing in step S5 ends than immediately after the processing in step S4 ends. However, the separating target particles P100 aggregate in the portion of the measurement flow path 151 continuous with the inlet hole 129 and in the inlet hole 129.

Upon completion of the processing in step S5, the processing in step S6 and the processing in step S7 are performed repeatedly. For example, a set of processing including the processing in step S6 and the processing in step S7 is performed a predetermined number of times. The predetermined number of times include five to ten times.

In step S6, the mixing fluid moves through the mixing flow path 115 toward the mixing hole 123. For example, the mixing fluid may be air. In this case, the air pressure at the mixing hole 123 is controlled to evacuate the mixing flow path 115. The air pressure can be controlled using, for example, a known pump.

The mixing flow path 115 is evacuated to cause the sample and the dispersing fluid to be drawn from the measurement flow path 151 into the mixing flow path 115. Based on the movement of the sample and the dispersing fluid, the processing in step S6 is referred to as fluid drawing.

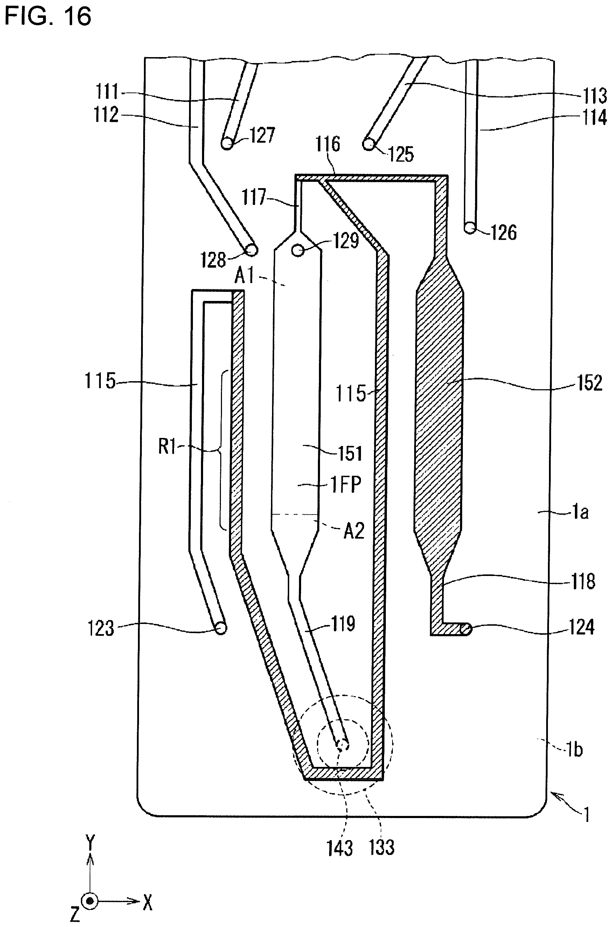

As illustrated in FIG. 16, the processing in step S6 ends before the sample and the dispersing fluid reach the mixing hole 123. Step S6 is performed to cause substantially both the sample and the dispersing fluid to be drawn from the measurement flow path 151 into the mixing flow path 115. The fluid drawing causes the separating target particles P100 to move to an area R1. The area R1 is an area with the sample or the dispersing fluid and relatively near the mixing hole 123.

In step S7, the mixing fluid moves through the mixing flow path 115 toward the flow path 119. The processing in step S7 causes the mixing fluid to move through the mixing flow path 115 toward the measurement flow path 151.

The mixing fluid moves through the mixing flow path 115 toward the flow path 119 and causes the sample and the dispersing fluid to be forced and mostly move from the mixing flow path 115 into the measurement flow path 151 through a part of the flow path 116 and the flow path 117. Based on the movement of the sample and the dispersing fluid, the processing in step S7 is referred to as fluid forcing out. The sample and the dispersing fluid mostly move through the measurement flow path 151 toward the flow path 119.

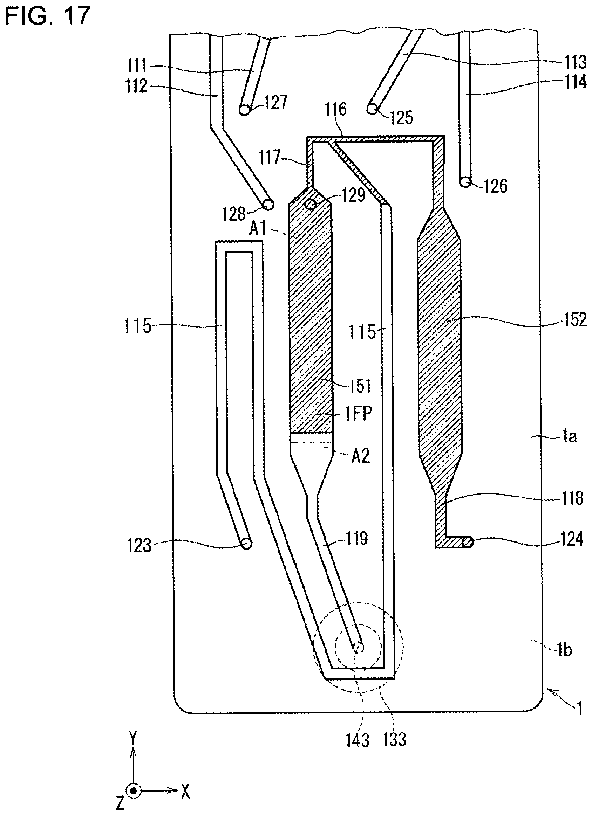

As illustrated in FIG. 17, the processing in step S7 ends before the sample and the dispersing fluid are forced to reach the second area A2 in the measurement flow path 151. Step S7 is performed to cause substantially all the sample and the dispersing fluid to be forced out of the mixing flow path 115 into the measurement flow path 151.

Upon completion of the processing in step S7, the determination is performed as to whether steps S6 and S7 have been repeated the predetermined number of times in step S8. In response to a negative determination result (No in FIG. 12), the processing in step S6 and the processing in step S7 are performed again.

The processing in step S6 and the processing in step S7 are repeatedly performed to cause the mixing fluid to move back and forth through the mixing flow path 115. The mixing fluid moves to mix the dispersing fluid and the sample. The mixed dispersing fluid can disperse the separating target particles P100. Dispersing the separating target particles P100 allows the predetermined process to be performed on the separating target particles P100 accurately or easily.

In response to an affirmative determination result in step S8 (Yes in FIG. 12), the processing in step S9 is performed. The processing in step S9 corresponds to the above predetermined process. The predetermined process includes, for example, counting the number of separating target particles P100 by optical measurement. Such counting by optical measurement is performed using, for example, both the measurement flow path 151 and the reference flow path 152.

In the processing in step S9, for example, the separating target particles P100 in the measurement flow path 151 can be counted by known optical measurement. In this case, for counting the separating target particles P100, the measurement flow path 151 in the processing device 1 is light-transmissive to allow light to pass through. For example, the separating target particles P100 are counted by measuring, nearer the first upper surface 1a, light traveling through the first lower surface 1b toward the first upper surface 1a and transmitted through the measurement flow path 151 in the processing device 1. A non-reflective member (not illustrated) may also be located on a portion of the first upper surface 1a above the measurement flow path 151. The non-reflective member is a plate or a sheet including an upper surface that can block external light from entering the measurement flow path 151 and a lower surface that can reduce reflection of light transmitted through the measurement flow path 151. In this case, the separating target particles P100 may be counted by measuring, nearer the first lower surface 1b, light traveling through the first lower surface 1b toward the first upper surface 1a, is reflected from the second surface 11b, which corresponds to an upper surface (ceiling surface) of the measurement flow path 151, returns through the measurement flow path 151, and is transmitted through the measurement flow path 151 in the processing device 1. The processing device 1 made of a COP can be light-transmissive. In FIGs. 1, 3 to 5, and 7 to 9, the processing device 1 is hatched to indicate its light transmissiveness.

The processing in step S9 includes the same optical measurement performed on, for example, the reference flow path 152 as on the measurement flow path 151. The measurement result may be used as a reference value for counting at the measurement flow path 151. The reference value can be used to reduce counting errors.

Upon completion of the processing in step S9, for example, the mixing fluid is introduced into the mixing flow path 115 through the mixing hole 123 to discharge the sample and the dispersing fluid from the mixing flow path 115, the flow path 116, the flow path 117, the measurement flow path 151, and the flow path 119 through the outlet hole 143.

### 4. Detailed Example Structure of Processing Device

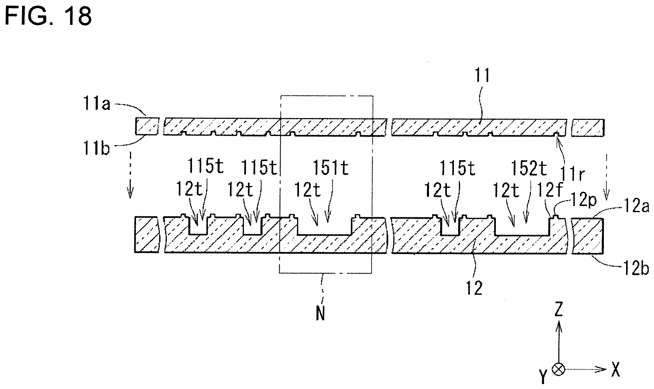

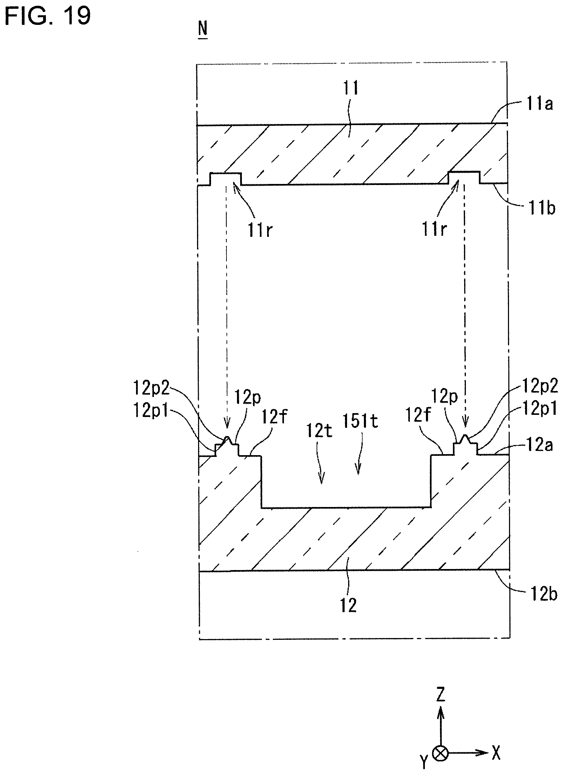

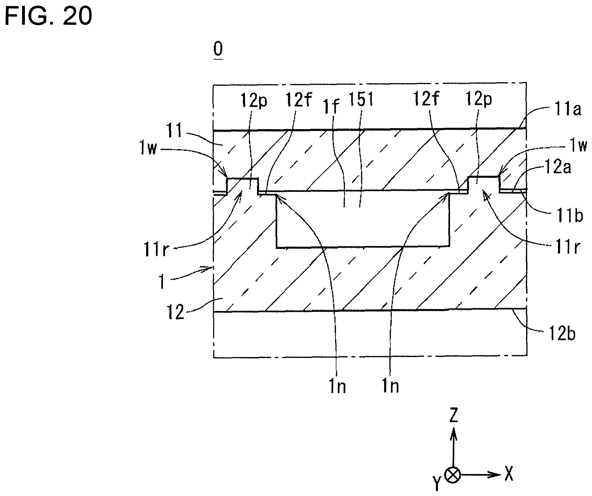

FIG. 18 illustrates an imaginary example cross section of the first plate 11 and the second plate 12 before being bonded together, corresponding to the cross section in FIG. 3. FIG. 19 partially illustrates an imaginary example cross section of the first plate 11 and the second plate 12 before being bonded together. In FIGs. 18 and 19, the first plate 11 is stacked on the second plate 12 in the direction indicated by the arrows drawn with the two-dot-dash lines. FIG. 20 partially illustrates an imaginary example cross section of the first plate 11 and the second plate 12 after being bonded together.

As illustrated in FIG. 18, the second plate 12 before being bonded to the first plate 11 includes multiple grooves 12t on the third surface 12a. The grooves 12t include, for example, three grooves 115t, 151t, and 152t. In the processing device 1 including the first plate 11 and the second plate 12 bonded together, the grooves 12t define the flow paths 1f together with the second surface 11b of the first plate 11. More specifically, the grooves 12t and the second surface 11b of the first plate 11 define the mixing flow path 115, the eight flow paths 111, 112, 113, 114, 116, 117, 118, and 119, the measurement flow path 151, and the reference flow path 152 in the processing device 1. For example, the first plate 11 and the second plate 12 bonded together cause the groove 115t and the second surface 11b to define the mixing flow path 115, the groove 151t and the second surface 11b to define the measurement flow path 151, and the groove 152t and the second surface 11b to define the reference flow path 152. The groove 151t has a width of, for example, about 3 to 5 mm. The width of the groove 151t refers to the dimension of the groove 151t in X-direction.

As illustrated in FIG. 19, the second plate 12 before being bonded to the first plate 11 includes the third surface 12a including multiple protruding portions 12p. More specifically, the third surface 12a of the second plate 12 includes, for each of the grooves 12t, the protruding portions 12p extending along the groove 12t with the groove 12t in between in the direction (also referred to as a width direction) perpendicular to the longitudinal direction in which the groove 12t extends and parallel to the third surface 12a. The third surface 12a includes, for each of the grooves 12t, flat portions 12f between the groove 12t and the protruding portions 12p. For simplicity, some protruding portions 12p and flat portions 12f are illustrated without reference numerals as appropriate in FIG. 18.

In the example in FIG. 19, the third surface 12a of the second plate 12 includes the protruding portions 12p extending along the groove 151t with the groove 151t in between in the direction (width direction) perpendicular to the longitudinal direction in which the groove 151t extends and parallel to the third surface 12a. The longitudinal direction of the groove 151t herein is the negative Y-direction, and the width direction of the groove 151t is the positive X-direction. The third surface 12a includes the flat portions 12f between the groove 151t and the protruding portions 12p with the groove 151t in between in the width direction of the groove 151t.

Each protruding portion 12p includes a base 12p1 and a protrusion 12p2. The base 12p1 is a portion of the protruding portion 12p nearer the fourth surface 12b. The base 12p1 extends in the longitudinal direction of the groove 12t and has a rectangular imaginary cross section perpendicular to the longitudinal direction of the groove 12t. The protrusion 12p2 extends in the longitudinal direction of the groove 12t on the base 12p1. The protrusion 12p2 is a distal end of the protruding portion 12p. The base 12p1 has a width of, for example, about 0.7 mm. The width of the base 12p1 refers to the dimension of the base 12p1 in the width direction of the groove 12t. The base 12p1 has a height of, for example, about 0.3 mm. The height of the base 12p1 refers to the dimension of the base 12p1 in the direction from the fourth surface 12b toward the third surface 12a. The protrusion 12p2 has a height of, for example, about 0.2 mm. The height of the protrusion 12p2 refers to the dimension of the protrusion 12p2 in the direction from the fourth surface 12b toward the third surface 12a. The protrusion 12p2 has a width of, for example, about 0.2 to 0.4 mm. The width of the protrusion 12p2 refers to the dimension of the protrusion 12p2 in the width direction of the groove 12t. The width of the protrusion 12p2 is, for example, greatest in a portion nearer the base 12p1 and gradually decreases away from the base 12p1. The flat portion 12f has a width of about 0.2 to 0.4 mm. The width of the flat portion 12f refers to the dimension of the flat portion 12f in the width direction of the groove 12t. The width of the flat portion 12f also refers to the distance between the groove 12t and the protruding portion 12p.

The first plate 11 before being bonded to the second plate 12 includes the second surface 11b including multiple recessed portions 11r at positions to be in contact with the multiple protruding portions 12p on the third surface 12a when the first plate 11 is stacked on the second plate 12 to form the processing device 1. For simplicity, some recessed portions 11r are illustrated without reference numerals as appropriate in FIG. 18. The multiple recessed portions 11r are located to receive the multiple protruding portions 12p when the first plate 11 is stacked on the second plate 12. In other words, the recessed portions 11r and the protruding portions 12p are located to allow each recessed portion 11r to receive a different one of the protruding portions 12p. Each recessed portion 11r has a width of about 1 mm. The width of the recessed portion 11r refers to the dimension of the recessed portion 11r in the direction perpendicular to the longitudinal direction of the recessed portion 11r and parallel to the second surface 11b.

To bond the first plate 11 and the second plate 12 together, the first plate 11 is stacked on the second plate 12 with the recessed portions 11r receiving the protruding portions 12p. The protruding portions 12p are then bonded to the recessed portions 11r by, for example, ultrasonic welding. In this case, the protrusions 12p2 on the protruding portions 12p melt to fill spaces between the recessed portions 11r and the protruding portions 12p and then solidify to bond the recessed portions 11r and the protruding portions 12p together. This forms the processing device 1 in which the second surface 11b of the first plate 11 is bonded to a part of the third surface 12a of the second plate 12, as illustrated in FIG. 20.

As illustrated in FIG. 20, the processing device 1 includes bonded portions 1w and non-bonded portions 1n. The processing device 1 includes, for each flow path 1f, the bonded portions 1w and the non-bonded portions 1n.

The processing device 1 includes, for each flow path 1f, the bonded portions 1w extending along the flow path 1f with the flow path 1f in between in the direction (width direction) perpendicular to the longitudinal direction of the flow path 1f and parallel to the second surface 11b. In other words, for each flow path 1f, the bonded portions 1w nearly or fully surround the flow path 1f in the processing device 1 as viewed in plan in the negative Z-direction. In the bonded portions 1w, the recessed portions 11r on the second surface 11b and the protruding portions 12p on the third surface 12a are bonded together. In other words, when the second surface 11b includes the recessed portions 11r and the third surface 12a includes the protruding portions 12p, the protruding portions 12p and the recessed portions 11r are bonded together in the bonded portions 1w.

The processing device 1 includes, for each flow path 1f, the non-bonded portions 1n between the protruding portions 12p and the measurement flow path 151 with the flow path 1f in between. The non-bonded portions 1n are located in the direction (width direction) perpendicular to the longitudinal direction of the flow path 1f and parallel to the second surface 11b. In other words, for each flow path 1f, the non-bonded portions 1n between the flow path 1f and the bonded portions 1w nearly or fully surround the flow path 1f in the processing device 1 as viewed in plan in the negative Z-direction. In the non-bonded portions 1n, the second surface 11b is not bonded to the third surface 12a and is in contact with or adjacent to the third surface 12a.

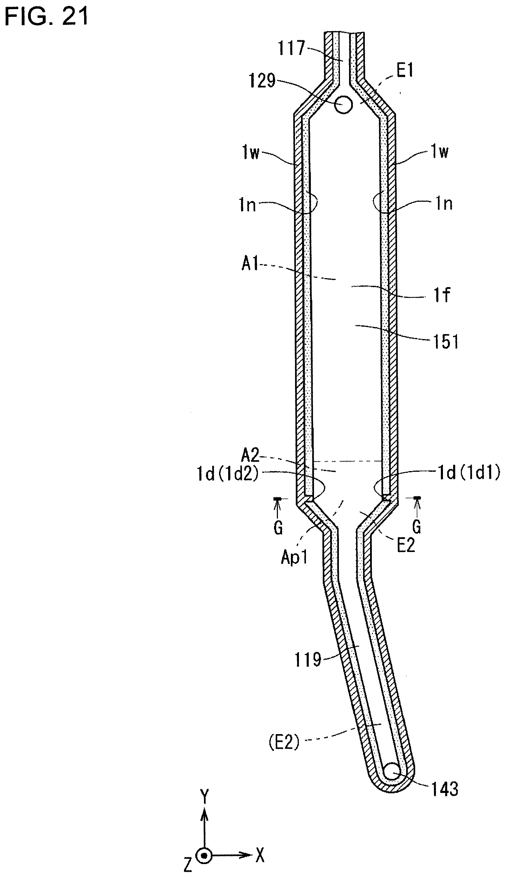

FIG. 21 is a schematic plan view of the measurement flow path 151 and its adjacent area in the processing device 1. In FIG. 21, the outer edges of the measurement flow path 151, the outlet hole 143, the bonded portions 1w, and the non-bonded portions 1n are drawn with the solid lines, the bonded portions 1w are hatched with diagonal lines from the lower left to the upper right, and the non-bonded portions 1n are hatched with a dot pattern for ease of illustration. In FIG. 21, the two-dot-dash line indicates the boundary between the first area A1 and the second area A2.

As illustrated in FIG. 21, the processing device 1 includes the bonded portions 1w and the non-bonded portions 1n extending along the measurement flow path 151.

The bonded portions 1w extend along the measurement flow path 151 with the measurement flow path 151 in between in the width direction perpendicular to the longitudinal direction (first longitudinal direction) of the measurement flow path 151 and parallel to the second surface 11b. In other words, the bonded portions 1w surround the measurement flow path 151 excluding portions continuous with the other flow paths 117 and 119 when the processing device 1 is viewed in plan in the negative Z-direction. In the bonded portions 1w, the recessed portions 11r on the second surface 11b and the protruding portions 12p on the third surface 12a are bonded together.

The non-bonded portions 1n extend along the measurement flow path 151 between the protruding portions 12p and the measurement flow path 151 with the measurement flow path 151 in between in the width direction perpendicular to the longitudinal direction (first longitudinal direction) of the measurement flow path 151 and parallel to the second surface 11b. In other words, the non-bonded portions 1n surround the measurement flow path 151 between the measurement flow path 151 and the bonded portions 1w excluding the portions continuous with the other flow paths 117 and 119 when the processing device 1 is viewed in plan in the negative Z-direction. In the non-bonded portions 1n, the second surface 11b and the third surface 12a are not bonded together and are in contact with or adjacent to each other. Each non-bonded portion 1n thus includes a space between the second surface 11b and the flat portion 12f.

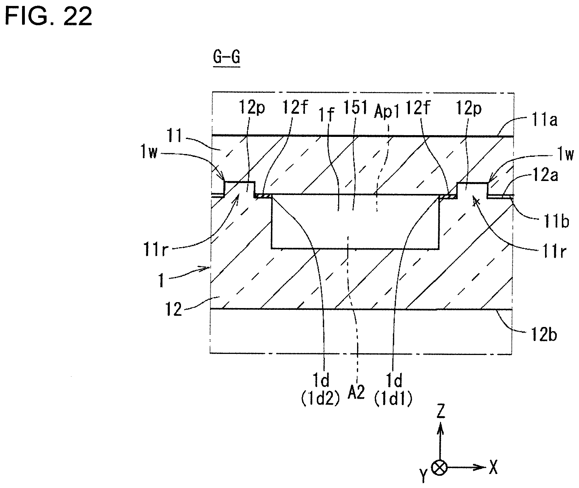

FIG. 22 illustrates an imaginary example cross section of the first plate 11 and the second plate 12 after being bonded together.

As illustrated in FIGs. 21 and 22, the processing device 1 includes a pair of dividers 1d. The pair of dividers 1d include a first divider 1d1 and a second divider 1d2. The first divider 1d1 and the second divider 1d2 are located with the measurement flow path 151 in between in the width direction of the measurement flow path 151. In FIG. 22, the dividers 1d are hatched with thick diagonal lines from the lower left to the upper right. The pair of dividers 1d divide the non-bonded portions 1n extending along the measurement flow path 151 with the measurement flow path 151 in between in the width direction of the measurement flow path 151. The pair of dividers 1d divide the non-bonded portions 1n in the longitudinal direction (first longitudinal direction) of the measurement flow path 151. In the processing device 1, the pair of dividers 1d fill spaces between a partial area Ap1 of the measurement flow path 151 and the protruding portions 12p with the measurement flow path 151 in between in the width direction of the measurement flow path 151. The partial area Ap1 is located between the first end area E1 and the second end area E2 in the measurement flow path 151 in the longitudinal direction (first longitudinal direction) of the measurement flow path 151.

More specifically, the first divider 1d1 in the positive X-direction, or a first direction as the width direction of the measurement flow path 151, divides the non-bonded portion 1n in the first longitudinal direction. The second divider 1d2 in the negative X-direction, or a second direction opposite to the first direction as the width direction of the measurement flow path 151, divides the non-bonded portion 1n in the first longitudinal direction. The first divider 1d1 in the positive X-direction, or the first direction as the width direction of the measurement flow path 151, fills a space between the partial area Ap1 of the measurement flow path 151 and the corresponding protruding portion 12p. The second divider 1d2 in the negative X-direction, or the second direction as the width direction of the measurement flow path 151, fills a space between the partial area Ap1 of the measurement flow path 151 and the corresponding protruding portion 12p.

In other words, the pair of dividers 1d fill spaces between the second surface 11b and the flat portions 12f with the partial area Ap1 of the measurement flow path 151 in between in the width direction of the measurement flow path 151. More specifically, the first divider 1d1 adjacent to the partial area Ap1 of the measurement flow path 151 in the positive X-direction, or the first direction as the width direction of the measurement flow path 151, fills a space between the second surface 11b and the corresponding flat portion 12f. The second divider 1 d2 adjacent to the partial area Ap1 of the measurement flow path 151 in the negative X-direction, or the second direction as the width direction of the measurement flow path 151, fills a space between the second surface 11b and the corresponding flat portion 12f. The dividers 1d may slightly protrude to the measurement flow path 151.

The sample and the dispersing fluid are introduced from, for example, a portion of the measurement flow path 151 nearer the inlet hole 129 to a portion between the first end area E1 nearer the inlet hole 129 and the second end area E2 nearer the outlet hole 143. In this case, when the dispersing fluid containing the dispersed sample is introduced up to a portion of the measurement flow path 151 nearer the inlet hole 129 than the pair of dividers 1d, the pair of dividers 1d may stop a liquid from moving toward the outlet hole 143 through capillary action in the non-bonded portions 1n. The liquid is thus, for example, less likely to reach the outlet hole 143.

As described above, the measurement flow path 151 is, for example, divided into the first area A1 including the first end area E1 and the second area A2 including the second end area E2 in the longitudinal direction (first longitudinal direction) of the measurement flow path 151. In this case, the pair of dividers 1d may be located between the protruding portions 12p and a part of the second area A2 in the longitudinal direction (first longitudinal direction) of the measurement flow path 151 with the measurement flow path 151 in between in the width direction of the measurement flow path 151. More specifically, the first divider 1d1 in the positive X-direction, or the first direction as the width direction of the measurement flow path 151, is located between a part of the second area A2 and the protruding portion 12p in the longitudinal direction (first longitudinal direction) of the measurement flow path 151. The second divider 1d2 in the negative X-direction, or the second direction as the width direction of the measurement flow path 151, is located between a part of the second area A2 and the protruding portion 12p in the longitudinal direction (first longitudinal direction) of the measurement flow path 151. When the dispersing fluid containing the dispersed sample is introduced up to the first area A1, which is a portion of the measurement flow path 151 nearer the inlet hole 129 than the pair of dividers 1d, the pair of dividers 1d may stop a liquid from moving toward the outlet hole 143 through capillary action in the non-bonded portions 1n. The liquid is thus, for example, less likely to reach the outlet hole 143.

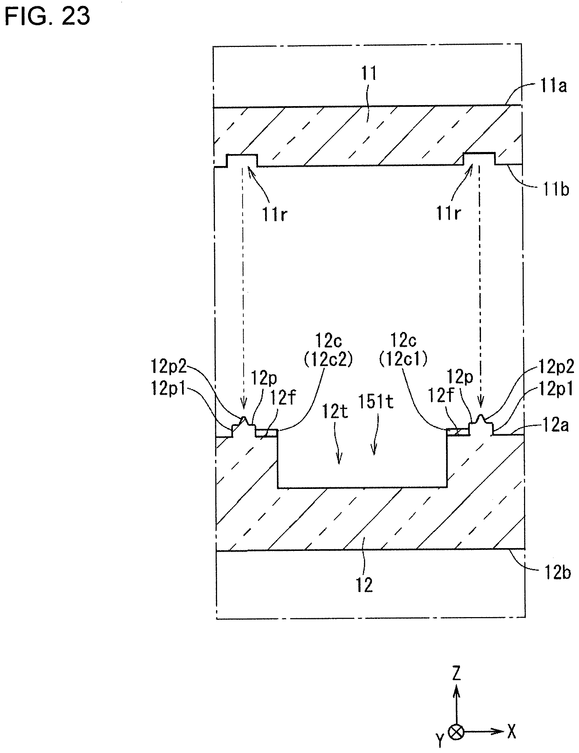

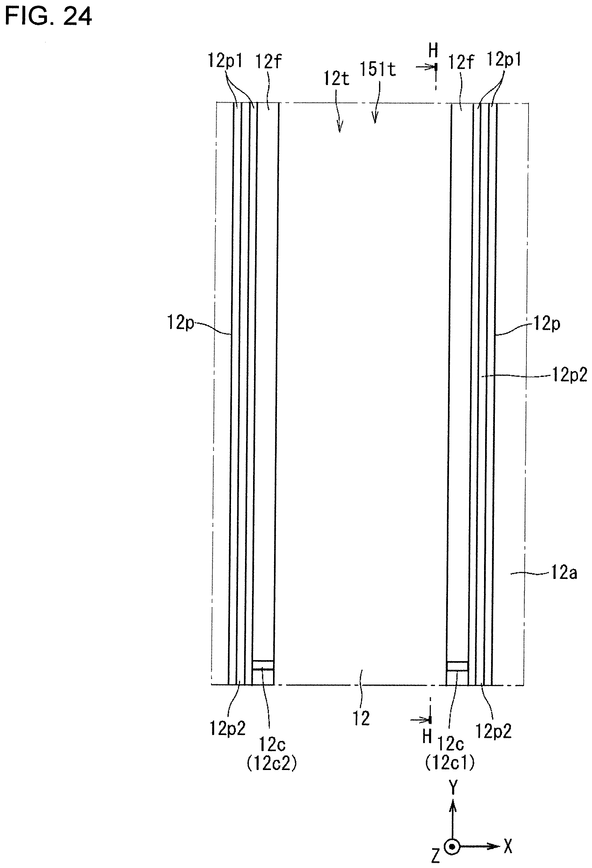

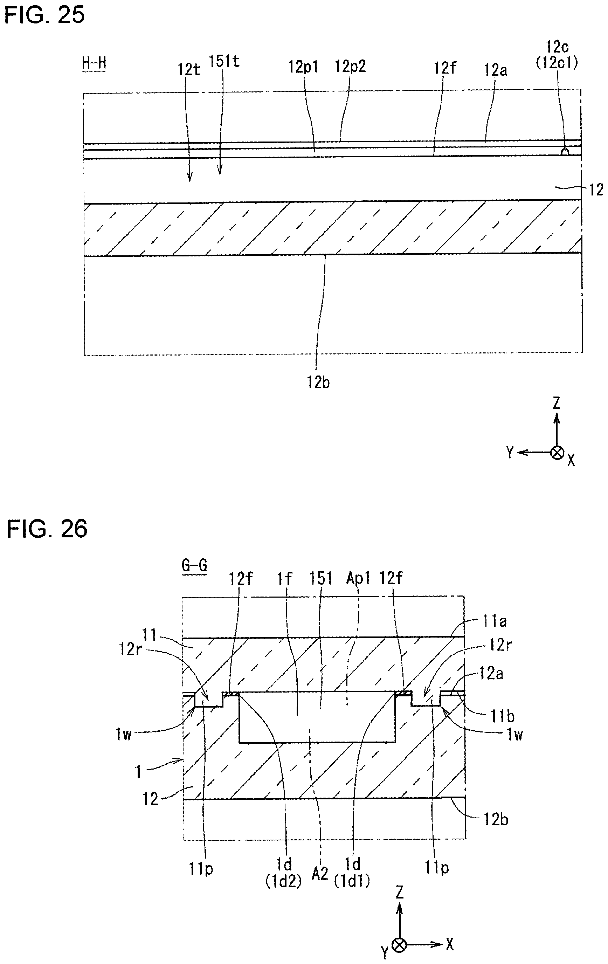

FIG. 23 is an imaginary example cross-sectional view of the first plate 11 and the second plate 12 before being bonded together, corresponding to the cross-sectional view in FIG. 22. In FIG. 23, the first plate 11 is stacked on the second plate 12 in the direction indicated by the arrows drawn with the two-dot-dash lines. FIG. 24 is a schematic view of a part of the second plate 12 before being bonded. FIG. 25 is a schematic imaginary example cross-sectional view of the second plate 12.

As illustrated in FIGs. 23 to 25, the third surface 12a of the second plate 12 before being bonded to the first plate 11 includes a pair of protuberances 12c on parts of the flat portions 12f with the groove 151t in between in the width direction of the groove 151t. More specifically, the pair of protuberances 12c include a first protuberance 12c1 and a second protuberance 12c2. The first protuberance 12c1 is located on a part of the corresponding flat portion 12f in the positive X-direction, or the first direction as the width direction of the groove 151t. The second protuberance 12c2 is located on a part of the corresponding flat portion 12f in the negative X-direction, or the second direction as the width direction of the groove 151t.

Each protuberance 12c extends, for example, across the flat portion 12f from the end nearer the protruding portion 12p to the end nearer the groove 151t. The protuberance 12c has a length substantially the same as the width of the flat portion 12f. The length of the protuberance 12c is about 0.2 to 0.4 mm. The length of the protuberance 12c refers to the dimension of the protuberance 12c in the width direction of the groove 151t. The protuberance 12c has a height lower than the base 12p1 of the protruding portion 12p. The height of the protuberance 12c is, for example, about 0.1 to 0.2 mm. The height of the protuberance 12c refers to the dimension of the protuberance 12c in the direction from the fourth surface 12b toward the third surface 12a. The protuberance 12c has a width of, for example, about 0.2 to 0.4 mm. The width of the protuberance 12c refers to the dimension of the protuberance 12c in the longitudinal direction of the groove 151t. The width of the protuberance 12c is, for example, greatest in a portion nearer the fourth surface 12b and gradually decreases away from the fourth surface 12b. The pair of protuberances 12c may be formed as parts of the second plate 12 when the second plate 12 is manufactured by, for example, resin molding or may be small pieces attached to the flat portions 12f of the second plate 12. The material for the small pieces may be, for example, the same material for the second plate 12.

For the second plate 12 including the pair of protuberances 12c, the pair of protuberances 12c are bonded to the second surface 11b when the multiple protruding portions 12p are bonded to the multiple recessed portions 11r by, for example, ultrasonic welding. The distal ends of the pair of protuberances 12c melt to fill spaces between the second surface 11b and the third surface 12a on the parts of the flat portions 12f in the longitudinal direction of the groove 151t and then solidify. This forms the pair of dividers 1d. In this case, the second surface 11b and the third surface 12a are bonded together also by the pair of dividers 1d.

### 4-1. Overview of Embodiment

The processing device 1 according to the embodiment includes the pair of dividers 1d dividing the non-bonded portions 1n in the longitudinal direction of the measurement flow path 151 with, for example, the measurement flow path 151 in between in the width direction of the measurement flow path 151. The pair of dividers 1d fill the spaces between the protruding portions 12p and the partial area Ap1, which is between the first end area E1 and the second end area E2 in the measurement flow path 151. This structure may allow the pair of dividers 1d to stop a liquid from moving toward the outlet hole 143 through capillary action in the non-bonded portions 1n when, for example, the dispersing fluid containing the dispersed sample is introduced up to a portion of the measurement flow path 151 nearer the inlet hole 129 than the pair of dividers 1d. Thus, when a liquid is introduced from a portion of the internal measurement flow path 151 nearer the inlet hole 129 to a portion between the first end area E1 continuous with the inlet hole 129 and the second end area E2 continuous with the outlet hole 143 in the processing device 1, for example, the liquid is less likely to reach the outlet hole 143.

### 5. Other Embodiments

The present disclosure is not limited to the embodiment described above and may be changed or varied variously without departing from the spirit and scope of the present disclosure.

In the above embodiment, for example, the second surface 11b may include protruding portions 11p bonded to recessed portions 12r on the third surface 12a in the bonded portions 1w as illustrated in FIG. 26. In this structure, the recessed portions 11r and the protruding portions 12p in the above embodiment are vertically exchanged. The second surface 11b may include the protruding portions 11p in the shape of the above protruding portions 12p inversed upside down. The third surface 12a may include the recessed portions 12r in the shape of the above recessed portions 11r inversed upside down. FIG. 26 illustrates an imaginary example cross section of the first plate 11 and the second plate 12 after being bonded together. In FIG. 26, the dividers 1d are hatched with thick diagonal lines from the lower left to the upper right. In this case, the bonded portions 1w extend along the measurement flow path 151 with the measurement flow path 151 in between in the width direction of the measurement flow path 151. The protruding portions 11p on the second surface 11b and the recessed portions 12r on the third surface 12a are bonded together in the bonded portions 1w. In other words, when the second surface 11b includes the protruding portions 11p and the third surface 12a includes the recessed portions 12r, the protruding portions 11p and the recessed portions 12r are bonded together in the bonded portions 1w. The non-bonded portions 1n extend along the measurement flow path 151 between the protruding portions 11p and the measurement flow path 151 with the measurement flow path 151 in between in the width direction of the measurement flow path 151. The pair of dividers 1d fill spaces between the partial area Ap1 of the measurement flow path 151 and the protruding portions 11p with the measurement flow path 151 in between in the width direction of the measurement flow path 151 and divide the non-bonded portions 1n in the longitudinal direction (first longitudinal direction) of the measurement flow path 151. More specifically, the first divider 1d1 in the positive X-direction, or the first direction as the width direction of the measurement flow path 151, fills a space between the partial area Ap1 of the measurement flow path 151 and the corresponding protruding portion 12p and divides the non-bonded portion 1n in the longitudinal direction (first longitudinal direction) of the measurement flow path 151. The second divider 1d2 in the negative X-direction, or the second direction as the width direction of the measurement flow path 151, fills a space between the partial area Ap1 of the measurement flow path 151 and the corresponding protruding portion 12p and divides the non-bonded portion 1n in the longitudinal direction (first longitudinal direction) of the measurement flow path 151.

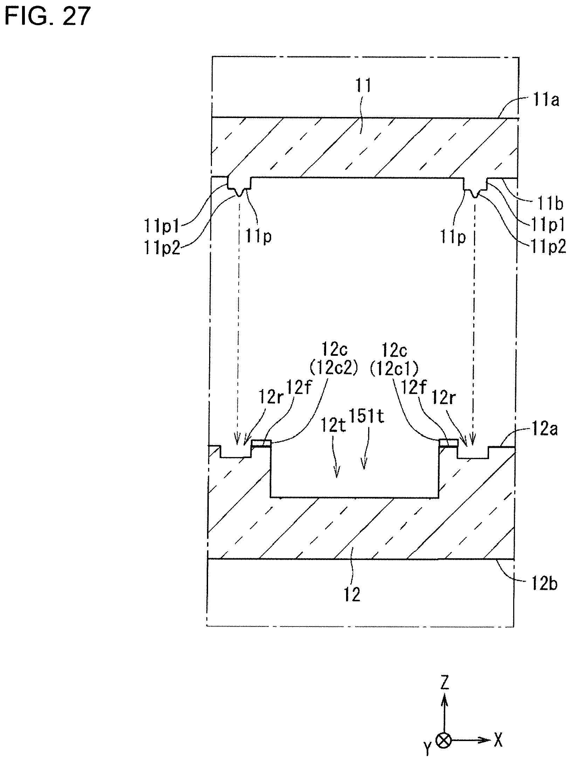

FIG. 27 illustrates an imaginary example cross section of the first plate 11 and the second plate 12 before being bonded together, corresponding to the cross section in FIG. 26. As illustrated in FIG. 27, the second plate 12 before being bonded to the first plate 11 includes the third surface 12a including multiple recessed portions 12r in place of the multiple protruding portions 12p. More specifically, the third surface 12a of the second plate 12 includes, for each groove 12t, the recessed portions 11r extending along the groove 12t with the groove 12t in between in the direction (also referred to as the width direction) perpendicular to the longitudinal direction in which the groove 12t extends and parallel to the third surface 12a. The third surface 12a includes, for each groove 12t, the flat portions 12f between the groove 12t and the recessed portions 12r. In the example in FIG. 27, the third surface 12a of the second plate 12 includes the recessed portions 12r extending along the groove 151t with the groove 151t in between in the direction (width direction) perpendicular to the longitudinal direction in which the groove 151t extends and parallel to the third surface 12a. The longitudinal direction of the groove 151t herein is the negative Y-direction, and the width direction of the groove 151t is the positive X-direction. The third surface 12a includes the flat portions 12f between the groove 151t and the recessed portions 12r with the groove 151t in between in the width direction of the groove 151t.

The first plate 11 before being bonded to the second plate 12 includes the second surface 11b including multiple protruding portions 11p at positions to be in contact with the multiple recessed portions 12r on the third surface 12a when the first plate 11 is stacked on the second plate 12 to form the processing device 1. The protruding portions 11p are at the positions to be received in the respective recessed portions 12r when the first plate 11 is stacked on the second plate 12. Each protruding portion 11p includes a base 11p1 and a protrusion 1 1p2. The base 11p1 is a portion of the protruding portion 11p nearer the first surface 11a. The base 11p1 extends in the longitudinal direction of the protruding portion 11p and has a rectangular imaginary cross section perpendicular to the longitudinal direction of the protruding portion 11p. The protrusion 11p2 extends in the longitudinal direction of the protruding portion 11p on the base 1 1p1. The protrusion 11p2 is a distal end of the protruding portion 11p.

The third surface 12a of the second plate 12 before being bonded to the first plate 11 includes the pair of protuberances 12c on parts of the flat portions 12f with the groove 151t in between in the width direction of the groove 151t. More specifically, the pair of protuberances 12c include a first protuberance 12c1 and a second protuberance 12c2. The first protuberance 12c1 is located on a part of the corresponding flat portion 12f in the positive X-direction, or the first direction as the width direction of the groove 151t. The second protuberance 12c2 is located on a part of the corresponding flat portion 12f in the negative X-direction, or the second direction as the width direction of the groove 151t. Each protuberance 12c extends, for example, across the flat portion 12f from the end nearer the recessed portion 12r to the end nearer the groove 151t. The protuberance 12c has a length substantially the same as the width of the flat portion 12f. The length of the protuberance 12c refers to the dimension of the protuberance 12c in the width direction of the groove 151t. The protuberance 12c has a height lower than the base 11p1 of the protruding portion 11p. The height of the protuberance 12c refers to the dimension of the protuberance 12c in the direction from the fourth surface 12b toward the third surface 12a. The width of the protuberance 12c is, for example, greatest in a portion nearer the fourth surface 12b and gradually decreases away from the fourth surface 12b. The protuberances 12c may be formed as parts of the second plate 12 when the second plate 12 is manufactured by, for example, resin molding or may be small pieces attached to the flat portions 12f of the second plate 12. The material for the small pieces may be, for example, the same material for the second plate 12.

The first plate 11 is stacked on the second plate 12 with the recessed portions 12r receiving the protruding portions 11p. The protruding portions 11p are then bonded to the recessed portions 12r by, for example, ultrasonic welding. In this case, the protrusions 11p2 on the protruding portions 11p melt to fill spaces between the recessed portions 12r and the protruding portions 11p and then solidify to bond the recessed portions 12r and the protruding portions 11p together. The pair of protuberances 12c are then bonded to the second surface 11b. The distal ends of the pair of protuberances 12c melt to fill spaces between the second surface 11b and the third surface 12a on the parts of the flat portions 12f in the longitudinal direction of the groove 151t and then solidify. This forms the pair of dividers 1d. In this case, the second surface 11b and the third surface 12a are bonded together also by the pair of dividers 1d. This forms the processing device 1 in which the second surface 11b of the first plate 11 is bonded to parts of the third surface 12a of the second plate 12 and the pair of dividers 1d may stop a liquid from moving toward the outlet hole 143 through capillary action in the non-bonded portions 1n, as illustrated in FIG. 26.

The pair of protuberances 12c being the pair of dividers 1d are located between, for example, the recessed portions 12r on the third surface 12a of the second plate 12 and the grooves 12t or at other locations in this example. In some embodiments, for example, in place of the pair of protuberances 12c, a pair of protuberances having the same or similar shapes as the pair of protuberances 12c in the above embodiment may be located adjacent to the protruding portions 11p on the second surface 11b of the first plate 11 to form the pair of dividers 1d. This can also form the processing device 1 that is the same or similar to the processing device 1 illustrated in FIG. 26.

In the above embodiment, the pair of protuberances 12c are, for example, adjacent to the protruding portions 12p on the third surface 12a of the second plate 12. In place of the pair of protuberances 12c, a pair of protuberances may be located adjacent to the recessed portions 11r on the second surface 11b of the first plate 11 to form the pair of dividers 1d. This can also form the processing device 1 that is the same as or similar to the processing device 1 illustrated in FIG. 22.

In the above embodiment, for example, the first divider 1d1 and the second divider 1d2 may divide the non-bonded portions 1n at the same positions or at different positions in the longitudinal direction (first longitudinal direction) of the measurement flow path 151.

In the above embodiment, for example, two or more pairs of dividers 1d may divide the non-bonded portions 1n in the first longitudinal direction at two or more positions different from each other in the longitudinal direction (first longitudinal direction) of the measurement flow path 151 with the measurement flow path 151 in between in the width direction of the measurement flow path 151.

In the above embodiment, for example, the separating device 3 may not be located on the processing device 1 with the connector 2 in between. In this case, for example, the third lower surface 3b of the separating device 3 may be in contact with the first upper surface 1a of the processing device 1. In another example, the three inlet holes 126, 128, and 129 and the two outlet holes 125 and 127 in the processing device 1 may be continuous with the three outlet holes 326, 328, and 329 and the two inlet holes 325 and 327 in the separating device 3 through, for example, tubes. For example, the inlet hole 129 as the first hole herein may be open in either the third surface 12a or the fourth surface 12b.

In the above embodiment, for example, the mixing hole 123 may not be open in the first surface 11a as the first upper surface 1a and may be open in the fourth surface 12b as the first lower surface 1b.

In the above embodiment, for example, the measurement flow path 151 may not be continuous with the outlet hole 143 through the flow path 119 and may be directly continuous with the outlet hole 143. In this case, the outlet hole 143 may be directly continuous with the second end area E2 in the measurement flow path 151 as the first flow path 1FP. In this structure as well, the outlet hole 143 as the second hole is continuous with the second end area E2 in the measurement flow path 151 as the first flow path 1FP.

In the above embodiment, for example, the measurement flow path 151 and the flow path 119 continuous with each other may be the first flow path 1FP as an integral flow path. In this structure, the area in the flow path 119 may be referred to as the second end area E2 located at the end of the first flow path 1FP opposite to the first end area E1 in the first longitudinal direction of the first flow path 1FP. The second end area E2 in the above structure is indicated with the reference numeral E2 in parentheses in FIG. 21. In this case, the outlet hole 143 is directly continuous with the second end area E2 in the first flow path 1FP. The second end area E2 may be, for example, an area in the flow path 119 continuous with the outlet hole 143. The pair of dividers 1d may be located with the flow path 119 in between in the width direction.

In the above embodiment, for example, the separating device 3 may include the separating flow path 30 and the five flow paths 35, 36, 37, 38, and 39 being grooves that are not open in either the third upper surface 3a or the third lower surface 3b. In this case, the separating device 3 may be manufactured by, for example, joining a first member, which is a sheet or a plate, and a second member, which is a sheet or a plate. The first member includes irregularities defining the separating flow path 30 and the five flow paths 35, 36, 37, 38, and 39. The second member includes five through-holes corresponding to the two inlet holes 325 and 327 and the three outlet holes 326, 328, and 329. In this structure, the third lower surface 3b is in contact with the second upper surface 2a excluding portions with the two inlet holes 325 and 327 and the three outlet holes 326, 328, and 329.

In the above embodiment, for example, the processing device 1 may include a pair of dividers having the same or a similar function as the pair of dividers 1d for another flow path different from the first flow path 1FP of the multiple flow paths 1f. Such a pair of dividers divide, in the longitudinal direction of the other flow path, the non-bonded portions 1n extending along the other flow path with the other flow path in between in the width direction of the other flow path. The pair of dividers may stop a fluid from moving along the other flow path through capillary action in the non-bonded portions 1n. This structure may reduce, for example, adverse effects potentially caused by a liquid moving along the other flow path through capillary action in the non-bonded portions 1n.

In the above embodiment, for example, the processing device 1 may include at least the first flow path 1FP of the multiple flow paths 1f. In this case, for example, the separating device 3 may not be stacked on the processing device 1, and the outlet hole 329 in the separating device 3 and the inlet hole 129 in the processing device 1 may be continuous with each other through, for example, a tube. In the separating device 3, the processing target fluid may be introduced into the inlet hole 325 through a tube or another component, and the pressing fluid may be introduced into the inlet hole 327 through, for example, a tube. In the separating device 3, the non-target particles P200 may be discharged through the outlet hole 326 through a tube or another component, and a component of the processing target fluid other than the non-target particles P200 and the separating target particles P100 may be discharged through the outlet hole 328 through, for example, a tube. This structure may allow the pair of dividers 1d to stop a liquid from moving toward the outlet hole 143 through capillary action in the non-bonded portions 1n when, for example, the sample is introduced up to a portion of the measurement flow path 151 nearer the inlet hole 129 than the pair of dividers 1d. Thus, when a liquid is introduced from a portion of the internal measurement flow path 151 nearer the inlet hole 129 to a portion between the first end area E1 continuous with the inlet hole 129 and the second end area E2 continuous with the outlet hole 143 in the processing device 1, for example, the liquid is less likely to reach the outlet hole 143.

When, for example, the separating target particles P100 undergo optical measurement as an example predetermined process, the flow path device 100 in the above embodiment may be an optical measurement device with an optical sensor. In this case, the optical sensor may include, for example, a light emitter and a light receiver. The light emitter may be a light emitting element such as a light-emitting diode (LED) or a laser diode (LD). The light receiver may be, for example, a light receiving element such as a photo diode (PD). The light receiving element may be, for example, a light receiving element including a semiconductor substrate of a first conductivity type having a semiconductor region of a second conductivity type in a surface layer near its upper surface. The light emitting element may be, for example, an element including the semiconductor substrate described above and multiple semiconductor layers stacked on the semiconductor substrate. In this structure, light emitted from the light emitter may pass through the sample in the measurement flow path 151 and may be received by the light receiver. Light emitted from the light emitter may also pass through the dispersing fluid in the reference flow path 152 and may be received by the light receiver. The optical sensor may be held by, for example, an actuator in a movable manner between a position facing the measurement flow path 151 and a position facing the reference flow path 152. The optical measurement device may include a controller for controlling the operation of the optical sensor. The controller may control the operation of the actuator that moves the optical sensor. The controller may perform various computation processes based on signals received from the light receiver that outputs signals in response to receiving light.

In the above embodiment, the material for the processing device 1 may be an acrylic resin, polycarbonate (PC), or a COP. An acrylic resin may include, for example, polymethyl methacrylate (PMMA).

In the above embodiment, for example, the first plate 11 and the second plate 12 may be bonded with any welding method different from ultrasonic welding, such as laser welding, heat welding, or diffusion welding. In other words, for example, the protruding portions 12p and the recessed portions 11r or the protruding portions 11p and the recessed portions 12r may be bonded together with any welding method.

The components described in the above embodiment and various examples may be entirely or partially combined as appropriate unless any contradiction arises.

### REFERENCE SIGNS

- 1: processing device
- 1FP: first flow path
- 1a: first upper surface
- 1b: second lower surface
- 1d: divider
- 1d1: first divider
- 1d2: second divider
- 1n: non-bonded portion
- 1w: bonded portion
- 2: connector
- 2FP: second flow path
- 3: separating device
- 3a: third upper surface (fifth surface)
- 3b: third lower surface (sixth surface)
- 11: first plate
- 11a: first surface
- 11b: second surface
- 11p, 12p: protruding portion
- 11r, 12r: recessed portion
- 12: second plate
- 12a: third surface
- 12b: fourth surface
- 30: separating flow path
- 100: flow path device
- 115: mixing flow path
- 119: flow path
- 123: mixing hole
- 129: inlet hole
- 143: outlet hole
- 151: measurement flow path
- 229: through-hole
- 329: outlet hole
- A1: first area
- A2: second area
- Ap1: partial area
- E1: first end area
- E2: second end area
- E3: third end area
- E4: fourth end area
- P100: separating target particle

## Claims

1. A flow path device, comprising:
a first plate including a first surface and a second surface opposite to the first surface;
a second plate stacked on the first plate, the second plate including a third surface and a fourth surface opposite to the third surface, the third surface being partially bonded to the second surface;
a first grooved flow path between the second surface and the third surface, the first grooved flow path not being open in the first surface and not being open in the fourth surface;
a first hole continuous with a first end area of the first grooved flow path in a first longitudinal direction of the first grooved flow path, the first hole being open in the first surface or being open in the fourth surface;
a second hole continuous with a second end area of the first grooved flow path, the second end area being opposite to the first end area in the first longitudinal direction, the second hole being open in the fourth surface;
a bonded portion extending along the first grooved flow path with the first grooved flow path between portions of the bonded portion in a width direction perpendicular to the first longitudinal direction and parallel to the second surface;
a non-bonded portion extending along the first grooved flow path with the first grooved flow path between portions of the non-bonded portion in the width direction; and
a pair of dividers dividing the non-bonded portion in the first longitudinal direction with the first grooved flow path between the pair of dividers in the width direction,
wherein with the second surface including a recessed portion and the third surface including a protruding portion or with the second surface including a protruding portion and the third surface including a recessed portion, the bonded portion is a portion in which the protruding portion is bonded to the recessed portion,
the non-bonded portion is located between the protruding portion and the first grooved flow path, and is a portion in which the second surface and the third surface are in contact with or adjacent to each other, and
each of the pair of dividers fills a space between the protruding portion and a partial area of the first grooved flow path located between the first end area and the second end area in the first longitudinal direction.

2. The flow path device according to claim 1, further comprising:
a second grooved flow path between the second surface and the third surface; and
a third hole continuous with the second grooved flow path, the third hole being open in the first surface or being open in the fourth surface,
wherein the second grooved flow path is not open in the first surface and is not open in the fourth surface, and is continuous with the first end area,
the second grooved flow path includes a third end area and a fourth end area opposite to the third end area in a second longitudinal direction of the second grooved flow path,
the third end area is continuous with the first grooved flow path, and
the third hole is continuous with the fourth end area.

3. The flow path device according to claim 2, wherein
with the first grooved flow path divided into a first area including the first end area and a second area including the second end area in the first longitudinal direction, the pair of dividers are each located between the protruding portion and a part of the second area in the first longitudinal direction with the first grooved flow path between the pair of dividers in the width direction, and
the first area includes an area into which a particle-containing fluid containing particles of a specific type is introduced through the first hole and in which the particle-containing fluid is mixed by movement of the particle-containing fluid in the first grooved flow path caused by supply and discharge of a fluid into and from the second grooved flow path through the third hole.

4. The flow path device according to any one of claims 1 to 3, wherein
the first hole is open in the first surface.

5. A separating processing device, comprising:
a first flow path device including the flow path device according to claim 4; and
a second flow path device on the first surface of the first flow path device,
wherein the second flow path device includes a fifth surface opposite to the first surface and a sixth surface opposite to the fifth surface and adjacent to the first surface,
the second flow path device includes a grooved separating flow path not being open in the fifth surface and a fourth hole continuous with the grooved separating flow path and open in the sixth surface, and
the fourth hole is continuous with the first hole.

6. The separating processing device according to claim 5, further comprising:
a connector being a sheet between the sixth surface of the second flow path device and the first surface of the first flow path device,
wherein the connector includes a through-hole connecting the fourth hole and the first hole.
